(19) Europäisches Patentamt
European Patent Office
Office européen des brevets

(11) **EP 4 629 635 A1**

(12) **EUROPEAN PATENT APPLICATION**
published in accordance with Art. 153(4) EPC

(43) Date of publication:
08.10.2025 Bulletin 2025/41

(21) Application number: 23910608.1

(22) Date of filing: 26.12.2023

(51) International Patent Classification (IPC):
**H04N 19/597** (2014.01)

(52) Cooperative Patent Classification (CPC):
**H04N 19/124; H04N 19/147; H04N 19/176;
H04N 19/597; H04N 19/91; H04N 21/44**

(86) International application number:
**PCT/CN2023/141967**

(87) International publication number:
**WO 2024/140685 (04.07.2024 Gazette 2024/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 29.12.2022 CN 202211703245

(71) Applicant: Huawei Technologies Co., Ltd.
**Shenzhen, Guangdong 518129 (CN)**

(72) Inventors:
• LIN, Zehui
**Shenzhen, Guangdong 518129 (CN)**

• CHEN, Huanbang
**Shenzhen, Guangdong 518129 (CN)**
• WEI, Rong
**Shenzhen, Guangdong 518129 (CN)**
• CAI, Kangying
**Shenzhen, Guangdong 518129 (CN)**
• ZHOU, Jiantong
**Shenzhen, Guangdong 518129 (CN)**
• LIU, Ligang
**Shenzhen, Guangdong 518129 (CN)**
• XU, Yiqun
**Shenzhen, Guangdong 518129 (CN)**

(74) Representative: **Eisenführ Speiser
Patentanwälte Rechtsanwälte PartGmbB
Gollierstraße 4
80339 München (DE)**

(54) **TERMINAL-CLOUD COLLABORATION SYSTEM, CODING METHOD, DECODING METHOD, AND ELECTRONIC DEVICE**

(57) Embodiments of this application provide a device-cloud collaboration system, an encoding and decoding method, and an electronic device. The encoding method includes: performing rendering processing on a three-dimensional scene based on a rendering parameter, to obtain a rendered image, where the rendering parameter includes a first rendering parameter obtained from a terminal device; selecting a first intermediate rendering result based on an intermediate rendering result generated in a rendering processing process; generating a virtual reference frame based on the first intermediate rendering result; predicting the rendered image based on the virtual reference frame, to obtain a predicted image; and encoding a residual image between the predicted image and the rendered image, and encoding encoded data of the residual image into a bitstream. The bitstream does not include encoded data of the first intermediate rendering result. In this way, a server may not transmit an intermediate rendering result to the terminal device, to reduce an interaction delay while it is ensured that bit rate overheads of a data stream transmitted by the server to the terminal device are effectively reduced.

FIG. 2a

## Description

This application claims priority to Chinese Patent Application No. 202211703245.1, filed with the China National Intellectual Property Administration on December 29, 2022 and entitled "DEVICE-CLOUD COLLABORATION SYSTEM, ENCODING AND DECODING METHOD, AND ELECTRONIC DEVICE", which is incorporated herein by reference in its entirety.

## TECHNICAL FIELD

Embodiments of this application relate to the encoding and decoding field, and in particular, to a device-cloud collaboration system, an encoding and decoding method, and an electronic device.

## BACKGROUND

In many scenarios (for example, games, virtual reality (Virtual Reality, VR)/augmented reality (Augmented Reality, AR)), rendering needs to be performed to generate an image, so that the obtained image is more realistic and use experience of users is improved. Rendering requires strong computational power. Limited by objective physical conditions such as a device size and power consumption, computational power of a device-side device is usually far weaker than that of a cloud-side server. Therefore, rendering is usually deployed on the cloud-side server. The cloud-side server performs rendering, compresses a rendered image/video, and sends the compressed rendered image/video to the device-side device for display by the device-side device.

As people's requirements for rendering quality are continuously improved and definition of display devices is continuously improved, image quality and resolution of the rendered image/video are also continuously improved accordingly. Consequently, bit rate overheads of the compressed rendered image/video are increased, network bandwidth occupation is increased, and an interaction delay is large. In the conventional technology, a cloud-side server usually encodes and transmits a rendered low-resolution image/video, and transmits, to a device-side device, an intermediate rendering result generated in a process of rendering a high-resolution image/video. The device-side device performs, based on the intermediate rendering result delivered by the cloud-side server, upsampling on a rendered low-resolution image/video delivered by a cloud side, to generate a high-resolution to-be-displayed image/video for display. In this way, although bit rate overheads can be reduced to some extent, encoding efficiency is still low.

## SUMMARY

In view of this, this application provides a device-cloud collaboration system, an encoding and decoding method, and an electronic device. The encoding and decoding method is implemented based on the device-cloud collaboration system, and can reduce an interaction delay while ensuring that bit rate overheads of a data stream transmitted by a server to a terminal device are effectively reduced.

According to a first aspect, an embodiment of this application provides a device-cloud collaboration system. The device-cloud collaboration system includes a server and a terminal device, the server includes a first rendering module, an encoder, and a first communication module, and the terminal device includes a second communication module, a second rendering module, and a decoder.

The first rendering module is configured to: perform rendering processing on a three-dimensional scene based on a rendering parameter, to obtain a rendered image, where the rendering parameter includes a first rendering parameter obtained from the terminal device; select a first intermediate rendering result based on an intermediate rendering result generated in a rendering processing process; and generate a virtual reference frame based on the first intermediate rendering result.

The encoder is configured to: predict the rendered image based on the virtual reference frame, to obtain a predicted image; and encode a residual image between the predicted image and the rendered image, and encode encoded data of the residual image into a bitstream. The bitstream does not include encoded data of the first intermediate rendering result.

The first communication module is configured to send the bitstream.

The second communication module is configured to receive the bitstream.

The decoder is configured to parse the bitstream, to obtain a parsing result. The parsing result includes a residual image corresponding to a current frame.

The second rendering module is configured to: perform rendering processing on the three-dimensional scene based on a rendering parameter corresponding to the current frame, and generate a first intermediate rendering result in a rendering processing process, where the rendering parameter corresponding to the current frame includes a first rendering parameter generated by the terminal device; and generate a virtual reference frame based on the first intermediate rendering result generated by the second rendering module.

The decoder is further configured to: predict the current frame based on the virtual reference frame generated by the second rendering module, to obtain a predicted image; and perform reconstruction based on the predicted image determined by the decoder and the residual image corresponding to the current frame, to obtain a reconstructed image of the current frame.

In this way, all rendering is performed by the terminal device, and further, the server may not send an intermediate rendering result to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

For example, the server may be a game server, and the server may be a single server, or may be a server cluster. This is not limited in this application.

For example, the terminal device includes but is not limited to a personal computer, a computer workstation, a smartphone, a tablet computer, a server, a smart camera, an intelligent vehicle, another type of cellular phone, a media consumption device, a wearable device (for example, a VR/AR helmet or VR glasses), a set-top box, a game console, and the like.

For example, the rendering parameter may be all parameters that are input into a graphics rendering engine and that are required for rendering processing by the graphics rendering engine, and may include various parameters used for rendering, position vectors and color vectors of all light sources, a position vector of a player or an observer, information such as a sampling manner of each texture and position coordinates of an object in each scene, a motion track of a moving object, a skeletal animation parameter, and the like. This is not limited in this application.

For example, the intermediate rendering result may be intermediate data that is used to generate a to-be-displayed image/video and that is generated by the graphics rendering engine in a process of generating the to-be-displayed image (namely, the rendered image)/video (namely, a rendered video). For example, the intermediate rendering result may include but is not limited to a computer graphics motion vector (Computer Graphics Motion Vector, CGMV), an intermediate rendered image (the intermediate rendered image is an image generated before a final rendered image (namely, the foregoing rendered image) is generated, calculation complexity of the intermediate rendered image is lower than calculation complexity of the rendered image, and the intermediate rendered image may be, for example, an intermediate rendered image on which indirect illumination rendering is not performed, an intermediate rendered image on which specular reflection processing is not performed, or an intermediate rendered image on which highlight processing is not performed), a position map (position map), a normal map (normal map), an albedo map (albedo map), a specular intensity map (specular intensity map), a mesh identifier (Mesh ID), a material ID (Material ID) (each material map corresponds to one material ID), a render ID (render ID) (each object (or one three-dimensional object model) corresponds to one render ID), depth information, and the like. This is not limited in this application. The first intermediate rendering result is a part of all intermediate rendering results generated in the rendering processing process. It should be noted that a type of an intermediate result included in the first intermediate rendering result generated by the terminal device is the same as a type of an intermediate result included in a first intermediate rendering result generated by the server, and precision of the intermediate result included in the first intermediate rendering result generated by the terminal device is less than or equal to precision of the intermediate result included in the first intermediate rendering result generated by the server.

It should be understood that, when the server performs lossy encoding on the residual image, the residual image obtained by the terminal device through parsing is different from the residual image encoded by the server. When the server performs lossless encoding on the residual block, the residual image obtained by the terminal device through parsing is the same as the residual image encoded by the server.

For example, the virtual reference frame is a reference frame generated based on prior information, and the prior information includes decoded information in an encoder and information other than a to-be-encoded video/image. The virtual reference frame may be used as supplementary information for inter encoding, to further remove video time domain redundancy.

It should be understood that the server in this application may include more or fewer modules than those described above. This is not limited in this application. The terminal device in this application may include more or fewer modules than those described above. This is not limited in this application.

It should be understood that a video coding standard used by the encoder and the decoder is not limited in this application. For example, the video coding standard may include but is not limited to H.264/AVC (Advanced Video Coding, advanced video coding), H.265/HEVC (High Efficiency Video Coding, high efficiency video coding), H.266/VVC (Versatile Video Coding, versatile video coding), AV1 (AOMedia Video 1, where "AOMedia" is video coding developed by the Alliance for Open Media), and the like, and extended standards of these video coding standards. In addition, the video coding standard may further include a new video coding standard and an extended standard that are generated with development of video coding and decoding technologies.

According to a second aspect, an embodiment of this application provides an encoding method, applied to a server. The method includes: performing rendering processing on a three-dimensional scene based on a rendering parameter, to obtain a rendered image, where the rendering parameter includes a first rendering parameter obtained from a terminal device; selecting a first intermediate rendering result based on an intermediate rendering result generated in a rendering processing process; generating a virtual reference frame based on the first intermediate rendering result; predicting the rendered image based on the virtual reference frame, to obtain a predicted image; and encoding a residual image between the predicted image and the rendered image, and encoding encoded data of the residual image into a bitstream. The bitstream does not include encoded data of the first intermediate rendering result.

In this way, all rendering is performed by the terminal device, and further, the server may not send an intermediate rendering result to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

In a possible manner, the virtual reference frame may be used as a reference frame of the rendered image, and then a predicted block (namely, the predicted image) matching a to-be-encoded block in the rendered image is searched for from the virtual reference frame.

In a possible manner, both the virtual reference frame and a raw reference frame may be used as candidate reference frames of the rendered image. The raw reference frame is a reconstructed image. For the to-be-encoded block in the rendered image, inter prediction may be performed based on a plurality of candidate reference frames, to determine a plurality of predicted blocks. One candidate reference frame corresponds to one predicted block. An optimal predicted block may be selected from the plurality of predicted blocks (for example, a predicted block with a minimum rate-distortion cost may be determined as the optimal predicted block by using the rate-distortion cost as an evaluation standard).

For example, the first intermediate rendering result is a part of the intermediate rendering result generated in the rendering processing process.

According to the second aspect, the bitstream further includes a first indication identifier and/or a second indication identifier. The first indication identifier indicates whether the bitstream includes the encoded data of the first intermediate rendering result, and the second indication identifier indicates a type of the first intermediate rendering result. In this way, the terminal device learns of whether the bitstream includes the first intermediate rendering result, and learns of the specific type of the to-be-generated first intermediate rendering result.

For example, the first intermediate rendering result may be classified into a plurality of types, for example, a motion vector type and an image type. When the first intermediate rendering result is a CGMV, the corresponding type may be the motion vector type. When the first intermediate rendering result is an intermediate rendered image, the corresponding type may be the image type. It should be understood that the first intermediate rendering result may further include another type. This is not limited in this application.

In a possible manner, the intermediate rendered image may be an image (the rendered image is an image generated by performing all rendering operations by a graphics rendering engine of the server) generated by performing some rendering operations by the graphics rendering engine.

In a possible manner, the intermediate rendered image may be an image generated by performing rendering by the graphics rendering engine of the server based on low-precision or some rendering parameters (the rendered image is an image generated by performing rendering by the graphics rendering engine based on all high-precision rendering parameters).

According to any one of the second aspect or the implementations of the second aspect, the rendering parameter further includes a second rendering parameter generated by the server. The method further includes: encoding a third rendering parameter into the bitstream. The third rendering parameter includes all or a part of parameters in the second rendering parameter.

Because a rendering parameter generated by the server is more accurate than a rendering parameter generated by the terminal device, the server may send a part or all of the second rendering parameter to the terminal device. In this way, a first intermediate rendering result generated by the terminal device can be more accurate, precision of the virtual reference frame can be improved, and image quality of an image obtained through decoding based on the virtual reference frame can be improved.

In addition, a data amount of the second rendering parameter is small (several/dozens of KB), and is far less than that of the intermediate rendering result. Therefore, even if the rendering parameter is sent to the terminal device in this application, bit rate overheads of a data stream sent by the server to the terminal device in this application are less than bit rate overheads of a data stream sent by the server to the terminal device in the conventional technology. In addition, computational power of the terminal device can be further saved.

It should be noted that the first rendering parameter and the second rendering parameter may form a rendering parameter (namely, all parameters that are input into a graphics rendering engine and that are required for rendering processing by the graphics rendering engine).

For example, the third rendering parameter may be encoded, and encoded data of the third rendering parameter is encoded into the bitstream; or the third rendering parameter may be directly added to the bitstream without being encoded. This is not limited in this application.

According to any one of the second aspect or the implementations of the second aspect, the rendering parameter further includes the second rendering parameter generated by the server. The bitstream further includes a third indication identifier and/or a fourth indication identifier. The third indication identifier indicates whether the bitstream includes the third rendering parameter. The third rendering parameter includes all or a part of parameters in the second rendering parameter. The fourth indication identifier indicates a type of the third rendering parameter. In this way, the terminal device learns of whether the bitstream includes the third rendering parameter. When the third rendering parameter is a part of the second rendering parameter, the terminal device may generate a fourth rendering parameter based on the type of the third rendering parameter. The fourth rendering parameter is a part of the second rendering parameter other than the third rendering parameter.

For example, the second rendering parameter may be classified into a plurality of types, for example, a type C1 and a type C2. For example, the second rendering parameter may include motion information of a rigid motion object and motion information of a non-rigid dynamic object. A type corresponding to the motion information of the rigid motion object is the type C1, and a type corresponding to the motion information of the non-rigid dynamic object is the type C2.

In a possible manner, the third rendering parameter may include motion information of a rigid motion object and motion information of a non-rigid dynamic object.

In a possible manner, the third rendering parameter may include motion information of a rigid motion object. In this way, compared with the third rendering parameter including the motion information of the rigid motion object and the motion information of the non-rigid dynamic object, the third rendering parameter including the motion information of the rigid dynamic object can further reduce the bit rate overheads of the data stream transmitted by the server to the terminal device.

In a possible manner, the third rendering parameter may include motion information of a non-rigid dynamic object. In this way, compared with the third rendering parameter including the motion information of the rigid motion object and the motion information of the non-rigid dynamic object, the third rendering parameter including the motion information of the non-rigid dynamic object can further reduce the bit rate overheads of the data stream transmitted by the server to the terminal device.

According to any one of the second aspect or the implementations of the second aspect, generating the virtual reference frame based on the first intermediate rendering result includes: determining the type of the first intermediate rendering result; and generating the virtual reference frame based on the first intermediate rendering result and the type of the first intermediate rendering result.

According to any one of the second aspect or the implementations of the second aspect, generating the virtual reference frame based on the first intermediate rendering result and the type of the first intermediate rendering result includes: generating the virtual reference frame based on the first intermediate rendering result and a reconstructed image when the type of the first intermediate rendering result is a motion vector type. The first intermediate rendering result is a computer graphics motion vector CGMV, and the CGMV is used to describe a displacement relationship between a sample in the rendered image and a sample in the reconstructed image.

The CGMV is generated through a graphic means, to avoid inaccurate motion estimation in the conventional technology. In addition, the CGMV is a pixel-level MV, and an MV generated through existing motion estimation is an image block-level MV. The pixel-level MV can more accurately describe an edge of an object, to reduce a prediction error. Therefore, determining the virtual reference frame based on the CGMV and then performing inter prediction based on the virtual reference frame can reduce an error of the predicted block to some extent, improve accuracy of the predicted block, and further improve inter encoding and compression efficiency.

According to any one of the second aspect or the implementations of the second aspect, generating the virtual reference frame based on the first intermediate rendering result and the type of the first intermediate rendering result includes: determining the intermediate rendering result as the virtual reference frame when it is determined that the type of the first intermediate rendering result is an image type. The first intermediate rendering result is an intermediate rendered image, and calculation complexity corresponding to the intermediate rendered image is lower than calculation complexity corresponding to the rendered image.

Because a difference between the intermediate rendered image and the rendered image is small, a small residual can be obtained, and further, a bit rate of encoded data of the residual block can be reduced.

According to any one of the second aspect or the implementations of the second aspect, the first intermediate rendering result includes a CGMV and/or an intermediate rendered image, and calculation complexity corresponding to the intermediate rendered image is lower than calculation complexity corresponding to the rendered image.

It should be understood that the first intermediate rendering result may further include another intermediate result. This is not limited in this application.

According to a third aspect, an embodiment of this application provides a decoding method. The decoding method includes: receiving a bitstream; parsing the bitstream, to obtain a parsing result, where the parsing result includes a residual image corresponding to a current frame; performing rendering processing on a three-dimensional scene based on a rendering parameter corresponding to the current frame, and generating a first intermediate rendering result in a rendering processing process, where the rendering parameter includes a first rendering parameter generated by a terminal device; generating a virtual reference frame based on the first intermediate rendering result; predicting the current frame based on the virtual reference frame, to obtain a predicted image; and performing reconstruction based on the predicted image and the residual image, to obtain a reconstructed image of the current frame.

According to the third aspect, the parsing result further includes a first indication identifier and a second indication identifier, the first indication identifier indicates whether the bitstream includes encoded data of a first intermediate rendering result generated by a server, and the second indication identifier indicates a type of the first intermediate rendering result generated by the server; and generating the first intermediate rendering result in the rendering processing process includes: generating the first intermediate rendering result in the rendering processing process based on the second indication identifier when it is determined, based on the first indication identifier, that the bitstream does not include the encoded data of the first intermediate rendering result generated by the server. In this way, the terminal device can generate a first intermediate rendering result whose type is the same as the type of the first intermediate rendering result generated by the server.

According to any one of the third aspect or the implementations of the third aspect, the parsing result further includes a third indication identifier and a fourth indication identifier, the third indication identifier indicates whether the bitstream includes a third rendering parameter, and the fourth indication identifier indicates a type of the third rendering parameter. The method further includes: determining the type of the third rendering parameter based on the fourth indication identifier when it is determined, based on the third indication identifier, that the bitstream includes the third rendering parameter; and generating a fourth rendering parameter of another type based on the type of the third rendering parameter. The another type is a type other than the type of the third rendering parameter in a plurality of types corresponding to a second rendering parameter generated by the server. The rendering parameter further includes the third rendering parameter and the fourth rendering parameter.

In this way, when the third rendering parameter sent by the server to the terminal device is a part of the second rendering parameter, the terminal device may generate a rendering parameter other than the third rendering parameter in the second rendering parameter based on the fourth indication identifier in the bitstream, to obtain all rendering parameters required for rendering processing by a graphics rendering engine.

For example, the rendering parameter further includes the third rendering parameter when it is determined, based on the fourth indication identifier, that the third rendering parameter is all of the second rendering parameter.

It should be understood that, when the server performs lossy encoding on the third rendering parameter, a third rendering parameter obtained by the terminal device through parsing is different from a third rendering parameter encoded by the server. When the server performs lossless encoding on the third rendering parameter, a third rendering parameter obtained by the terminal device through parsing is the same as a third rendering parameter encoded by the server.

According to any one of the third aspect or the implementations of the third aspect, the method further includes: When it is determined, based on the third indication identifier, that the bitstream does not include the third rendering parameter, the terminal device generates a second rendering parameter corresponding to the current frame. The rendering parameter further includes a second rendering parameter generated by the terminal device.

In this way, when the server does not send a second rendering parameter to the terminal device, the terminal device may further generate the second rendering parameter, to obtain all rendering parameters required for rendering processing by the graphics rendering engine.

It should be understood that a parameter type included in the second rendering parameter generated by the terminal device is the same as a parameter type included in the second rendering parameter generated by the server, and precision of a parameter included in the second rendering parameter generated by the terminal device is less than or equal to precision of a parameter included in the second rendering parameter generated by the server.

According to any one of the third aspect or the implementations of the third aspect, generating the virtual reference frame based on the first intermediate rendering result includes: determining the type of the first intermediate rendering result; and generating the virtual reference frame based on the first intermediate rendering result and the type of the first intermediate rendering result.

According to any one of the third aspect or the implementations of the third aspect, generating the virtual reference frame based on the first intermediate rendering result and type information of the first intermediate rendering result includes: generating the virtual reference frame based on the first intermediate rendering result and a reconstructed image of another frame when the type of the first intermediate rendering result is a motion vector type. The first intermediate rendering result is a computer graphics motion vector CGMV, and the CGMV is used to describe a displacement relationship between a sample in the reconstructed image of the current frame and a sample in the reconstructed image of the another frame.

According to any one of the third aspect or the implementations of the third aspect, generating the virtual reference frame based on the first intermediate rendering result and type information of the first intermediate rendering result includes: determining the first intermediate rendering result as the virtual reference frame when it is determined that the type of the first intermediate rendering result is an image type. The first intermediate rendering result is an intermediate rendered image, and calculation complexity corresponding to the intermediate rendered image is lower than calculation complexity corresponding to the rendered image.

According to any one of the third aspect or the implementations of the third aspect, the first intermediate rendering result includes a CGMV and/or an intermediate rendered image, and calculation complexity corresponding to the intermediate rendered image is lower than calculation complexity corresponding to the rendered image.

Any one of the third aspect and the implementations of the third aspect corresponds to any one of the second aspect and the implementations of the second aspect. For technical effects corresponding to any one of the third aspect and the implementations of the third aspect, refer to the technical effects corresponding to any one of the second aspect and the implementations of the second aspect. Details are not described herein again.

According to a fourth aspect, this application further provides a device-cloud collaboration system. The device-cloud collaboration system includes a server and a terminal device, the server includes a first rendering module, an encoder, and a first communication module, and the terminal device includes a second communication module, a second rendering module, and a decoder.

The first rendering module is configured to: perform rendering processing on a three-dimensional scene based on a rendering parameter, to obtain a rendered image, where the rendering parameter includes a first rendering parameter obtained from the terminal device; select a first intermediate rendering result based on an intermediate rendering result generated in a rendering processing process; and generate a virtual reference frame based on the first intermediate rendering result.

The encoder is configured to: predict the rendered image based on the virtual reference frame, to obtain a predicted image; encode a residual image between the predicted image and the rendered image, and encode encoded data of the residual image into a bitstream; and encode a second intermediate rendering result, and encode encoded data of the second intermediate rendering result into the bitstream. The second intermediate rendering result is a part of the first intermediate rendering result.

The first communication module is configured to send the bitstream.

The second communication module is configured to receive the bitstream.

The decoder is configured to parse the bitstream, to obtain a parsing result. The parsing result includes a residual image corresponding to a current frame and a second intermediate rendering result corresponding to the current frame.

The second rendering module is configured to:

perform rendering processing on the three-dimensional scene based on a rendering parameter corresponding to the current frame, and generate a third intermediate rendering result based on the second intermediate rendering result corresponding to the current frame in the rendering processing process, where the rendering parameter corresponding to the current frame includes a first rendering parameter generated by the terminal device; and generate a virtual reference frame based on a first intermediate rendering result. The first intermediate rendering result used by the second rendering module to generate the virtual reference frame includes the second intermediate rendering result corresponding to the current frame and the third intermediate rendering result.

The decoder is further configured to: predict the current frame based on the virtual reference frame generated by the second rendering module, to obtain a predicted image; and perform reconstruction based on the predicted image determined by the decoder and the residual image corresponding to the current frame, to obtain a reconstructed image of the current frame.

In this way, partial rendering is performed by the terminal device, and further, a server may send only some intermediate rendering results to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

For example, it is assumed that the first intermediate rendering result is a CGMV, and the CGMV may include a CGMV of a static object, a CGMV of a rigid dynamic object, and a CGMV of a non-rigid dynamic object; and the second intermediate rendering result may include any one or two of the CGMV of the static object, the CGMV of the rigid dynamic object, and the CGMV of the non-rigid dynamic object.

In a possible manner, the server may encode the CGMV of the static object. In this way, the terminal device does not need to calculate the CGMV of the static object, thereby saving computational power of the terminal device.

In a possible manner, the server may encode a CGMV of a dynamic object. In this way, the terminal device does not need to calculate the CGMV of the dynamic object, thereby saving computational power of the terminal device. In addition, a calculation amount of calculating the CGMV of the dynamic object is greater than a calculation amount of calculating the CGMV of the static object. Therefore, the CGMV of the dynamic object is encoded into the second bitstream and sent to the terminal device, to save more computational power of the terminal device.

For example, the CGMV of the dynamic object may include the CGMV of the rigid dynamic object and/or the CGMV of the non-rigid dynamic object.

In a possible manner, both the CGMV of the rigid dynamic object and the CGMV of the non-rigid dynamic object may be encoded.

In a possible manner, the CGMV of the rigid dynamic object may be encoded. In this way, a bit rate can be reduced in comparison with encoding of the CGMV of the rigid dynamic object and the CGMV of the non-rigid dynamic object.

In a possible manner, the CGMV of the non-rigid dynamic object may be encoded. In this way, a bit rate can be reduced in comparison with encoding of the CGMV of the rigid dynamic object and the CGMV of the non-rigid dynamic object. In addition, because a quantity of triangle meshes of the non-rigid dynamic object is large, a calculation amount of the CGMV of the non-rigid dynamic object is large. Therefore, compared with encoding of the CGMV of the rigid dynamic object, encoding of the CGMV of the non-rigid dynamic object can save more computational power of the terminal device.

For example, it is assumed that the first intermediate rendering result is an intermediate rendered image, and the server may use a part of area images in the intermediate rendered image as the second intermediate rendering result.

According to a fifth aspect, an embodiment of this application further provides an encoding method. The encoding method includes: performing rendering processing on a three-dimensional scene based on a rendering parameter, to obtain a rendered image, where the rendering parameter includes a first rendering parameter obtained from a terminal device; selecting a first intermediate rendering result based on an intermediate rendering result generated in a rendering processing process; generating a virtual reference frame based on the first intermediate rendering result; predicting the rendered image based on the virtual reference frame, to obtain a predicted image; encoding a residual image between the predicted image and the rendered image, and encoding encoded data of the residual image into a bitstream; and encoding a second intermediate rendering result, and encoding encoded data of the second intermediate rendering result into the bitstream. The second intermediate rendering result is a part of the first intermediate rendering result.

In this way, partial rendering is performed by the terminal device, and further, a server may send only some intermediate rendering results to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

According to the fifth aspect, the bitstream further includes a first indication identifier, and the first indication identifier indicates a type and a subtype of the second intermediate rendering result. In this way, the terminal device learns of a specific type and a specific subtype of a to-be-generated third intermediate rendering result. The third intermediate rendering result is a part of the first intermediate rendering result other than the second intermediate rendering result.

For example, the second intermediate rendering result may also include a plurality of types, for example, a motion vector type and an image type. When the second intermediate rendering result is a CGMV, the corresponding type may be the motion vector type. When the second intermediate rendering result is an intermediate rendered image, the corresponding type may be the image type.

For example, each type of the second intermediate rendering result may include a plurality of subtypes.

For example, the motion vector type may include a subtype A1, a subtype A2, and a subtype A3. A subtype corresponding to a CGMV of a static object is the subtype A1, a subtype corresponding to a CGMV of a rigid dynamic object is the subtype A2, and a subtype corresponding to a CGMV of a non-rigid dynamic object is the subtype A3.

For example, the image type may include a subtype B1 and a subtype B2. A subtype corresponding to areas corresponding to four corners in the intermediate rendered image is the subtype B1, and a subtype corresponding to an area other than the areas corresponding to the four corners in the intermediate rendered image is the subtype B2.

According to any one of the fifth aspect or the implementations of the fifth aspect, the rendering parameter further includes a second rendering parameter generated by the server. The method further includes: encoding a third rendering parameter into the bitstream. The third rendering parameter includes all or a part of parameters in the second rendering parameter.

According to any one of the fifth aspect or the implementations of the fifth aspect, the rendering parameter further includes the second rendering parameter generated by the server, and the bitstream further includes a second indication identifier and/or a third indication identifier; the second indication identifier indicates whether the bitstream includes the third rendering parameter, and the third rendering parameter includes all or a part of parameters in the second rendering parameter; and the third indication identifier indicates a type of the third rendering parameter.

According to any one of the fifth aspect or the implementations of the fifth aspect, generating the virtual reference frame based on the first intermediate rendering result includes: determining the type of the first intermediate rendering result; and generating the virtual reference frame based on the first intermediate rendering result and the type of the first intermediate rendering result.

According to any one of the fifth aspect or the implementations of the fifth aspect, generating the virtual reference frame based on the first intermediate rendering result and the type of the first intermediate rendering result includes: generating the virtual reference frame based on the first intermediate rendering result and a reconstructed image when the type of the first intermediate rendering result is a motion vector type. The first intermediate rendering result is a computer graphics motion vector CGMV, and the CGMV is used to describe a displacement relationship between a sample in the rendered image and a sample in the reconstructed image.

According to any one of the fifth aspect or the implementations of the fifth aspect, generating the virtual reference frame based on the first intermediate rendering result and the type of the first intermediate rendering result includes: determining the intermediate rendering result as the virtual reference frame when it is determined that the type of the first intermediate rendering result is an image type. The first intermediate rendering result is an intermediate rendered image, and calculation complexity corresponding to the intermediate rendered image is lower than calculation complexity corresponding to the rendered image.

According to any one of the fifth aspect or the implementations of the fifth aspect, the first intermediate rendering result includes a CGMV and/or an intermediate rendered image, and calculation complexity corresponding to the intermediate rendered image is lower than calculation complexity corresponding to the rendered image.

Any one of the fifth aspect and the implementations of the fifth aspect corresponds to any one of the second aspect and the implementations of the second aspect. For technical effects corresponding to any one of the fifth aspect and the implementations of the fifth aspect, refer to technical effects corresponding to any one of the second aspect and the implementations of the second aspect. Details are not described herein again.

According to a sixth aspect, this application further provides a decoding method, applied to a terminal device. The decoding method includes: receiving a bitstream; parsing the bitstream, to obtain a parsing result, where the parsing result includes a residual image corresponding to a current frame and a second intermediate rendering result corresponding to the current frame; performing rendering processing on a three-dimensional scene based on a rendering parameter corresponding to the current frame, and generating a third intermediate rendering result based on the second intermediate rendering result in a rendering processing process, where the rendering parameter includes a first rendering parameter generated by the terminal device; generating a virtual reference frame based on a first intermediate rendering result, where the first intermediate rendering result includes the second intermediate rendering result and the third intermediate rendering result; predicting the current frame based on the virtual reference frame, to determine a predicted image; and performing reconstruction based on the predicted image and the residual image, to obtain a reconstructed image of the current frame.

In this way, a first intermediate rendering result obtained by the terminal device includes the third intermediate rendering result generated by the terminal device and a second intermediate rendering result generated by a server. Because the second intermediate rendering result generated by the server is more accurate than a second intermediate rendering result generated by the terminal device, the first intermediate rendering result used by the terminal device to generate the virtual reference frame can be more accurate, to further improve precision of the virtual reference frame, and improve image quality of the reconstructed image. In addition, the terminal device needs to generate only a part of the first intermediate rendering result, so that computational power of the terminal device can be saved, and decoding efficiency can be improved.

It should be understood that, when the server performs lossy encoding on the second intermediate result, a second intermediate result obtained by the terminal device through parsing is different from the second intermediate result encoded by the server. When the server performs lossless encoding on the second intermediate result, a second intermediate result obtained by the terminal device through parsing is the same as the second intermediate result encoded by the server.

It should be understood that, because the third intermediate rendering result is generated by the terminal device, a type of an intermediate result included in the first intermediate rendering result obtained by the terminal device through combination is the same as a type of an intermediate result included in a first intermediate rendering result generated by the server. Precision of the intermediate result included in the first intermediate rendering result obtained by the terminal device through combination is less than or equal to precision of the intermediate result included in the first intermediate rendering result generated by the server.

According to the sixth aspect, the decoding result further includes a first indication identifier, and the first indication identifier indicates a type and a subtype of the second intermediate rendering result; and generating the third intermediate rendering result based on the second intermediate rendering result in the rendering processing process includes: determining the type and the subtype of the second intermediate rendering result based on the first indication identifier; and generating a third intermediate rendering result of another subtype based on the type and the subtype of the second intermediate rendering result in the rendering processing process, where the another subtype is a subtype in subtypes included in the type corresponding to the second intermediate rendering result other than the subtype of the second intermediate rendering result.

According to any one of the sixth aspect or the implementations of the sixth aspect, the parsing result further includes a second indication identifier and a third indication identifier, the second indication identifier indicates whether the bitstream includes a third rendering parameter, and the third identifier indicates a type of the third rendering parameter. The method further includes: determining the type of the third rendering parameter based on the third indication identifier when it is determined, based on the second indication identifier, that the bitstream includes the third rendering parameter; and generating a fourth rendering parameter of another type based on the type of the third rendering parameter. The another type is a type other than the type of the third rendering parameter in a plurality of types corresponding to a second rendering parameter generated by the server. The rendering parameter further includes the third rendering parameter and the fourth rendering parameter.

According to any one of the sixth aspect or the implementations of the sixth aspect, the method further includes: When it is determined, based on the second indication identifier, that the bitstream does not include the third rendering parameter, the terminal device generates a second rendering parameter corresponding to the current frame. The rendering parameter further includes a second rendering parameter generated by the terminal device.

According to any one of the sixth aspect or the implementations of the sixth aspect, generating the virtual reference frame based on the first intermediate rendering result includes: determining the type of the first intermediate rendering result; and generating the virtual reference frame based on the first intermediate rendering result and the type of the first intermediate rendering result.

According to any one of the sixth aspect or the implementations of the sixth aspect, generating the virtual reference frame based on the first intermediate rendering result and type information of the first intermediate rendering result includes: generating the virtual reference frame based on the first intermediate rendering result and a reconstructed image of another frame when the type of the first intermediate rendering result is a motion vector. The first intermediate rendering result is a computer graphics motion vector CGMV, and the CGMV is used to describe a displacement relationship between a sample in the reconstructed image of the current frame and a sample in the reconstructed image of the another frame.

According to any one of the sixth aspect or the implementations of the sixth aspect, generating the virtual reference frame based on the first intermediate rendering result and type information of the first intermediate rendering result includes: determining the first intermediate rendering result as the virtual reference frame when it is determined that the type of the first intermediate rendering result is an image type. The first intermediate rendering result is an intermediate rendered image, and calculation complexity corresponding to the intermediate rendered image is lower than calculation complexity corresponding to the rendered image.

According to any one of the sixth aspect or the implementations of the sixth aspect, the first intermediate rendering result includes a CGMV and/or an intermediate rendered image, and calculation complexity corresponding to the intermediate rendered image is lower than calculation complexity corresponding to the rendered image.

Any one of the sixth aspect and the implementations of the sixth aspect corresponds to any one of the third aspect and the implementations of the third aspect. For technical effects corresponding to any one of the sixth aspect and the implementations of the sixth aspect, refer to technical effects corresponding to any one of the third aspect and the implementations of the third aspect. Details are not described herein again.

According to a seventh aspect, this application provides a bitstream generation method. In the method, a bitstream is generated based on the first rendering parameter in any one of the third aspect and the implementations of the third aspect.

According to an eighth aspect, this application provides a bitstream generation method. In the method, a bitstream is generated based on the first rendering parameter in any one of the sixth aspect and the implementations of the sixth aspect.

According to a ninth aspect, an embodiment of this application provides a server, including a memory and a processor. The memory is coupled to the processor. The memory stores program instructions, and when the program instructions are executed by the processor, the server is enabled to perform the encoding method according to any one of the second aspect or the possible implementations of the second aspect, or the server is enabled to perform the encoding method according to any one of the fifth aspect or the possible implementations of the fifth aspect.

Any one of the ninth aspect and the implementations of the ninth aspect corresponds to any one of the second aspect and the implementations of the second aspect, or corresponds to any one of the fifth aspect and the implementations of the fifth aspect. For technical effects corresponding to any one of the ninth aspect and the implementations of the ninth aspect, refer to technical effects corresponding to any one of the second aspect and the implementations of the second aspect, or refer to technical effects corresponding to any one of the fifth aspect and the implementations of the fifth aspect. Details are not described herein again.

According to a tenth aspect, an embodiment of this application provides a terminal device, including a memory and a processor. The memory is coupled to the processor. The memory stores program instructions. When the program instructions are executed by the processor, the terminal device is enabled to perform the decoding method according to any one of the third aspect or the possible implementations of the third aspect, or the terminal device is enabled to perform the decoding method according to any one of the sixth aspect or the possible implementations of the sixth aspect.

Any one of the tenth aspect and the implementations of the tenth aspect corresponds to any one of the third aspect and the implementations of the third aspect, or corresponds to any one of the sixth aspect and the implementations of the sixth aspect. For technical effects corresponding to any one of the tenth aspect and the implementations of the tenth aspect, refer to technical effects corresponding to any one of the second aspect and the implementations of the second aspect, or refer to technical effects corresponding to any one of the sixth aspect and the implementations of the sixth aspect. Details are not described herein again.

According to an eleventh aspect, an embodiment of this application provides a chip, including one or more interface circuits and one or more processors. The interface circuit is configured to: receive a signal from a storage of a server, and send the signal to the processor. The signal includes computer instructions stored in the storage. When the processor executes the computer instructions, the server is enabled to perform the encoding method according to any one of the second aspect or the possible implementations of the second aspect, or the server is enabled to perform the encoding method according to any one of the fifth aspect or the possible implementations of the fifth aspect.

Any one of the eleventh aspect and the implementations of the eleventh aspect corresponds to any one of the second aspect and the implementations of the second aspect, or corresponds to any one of the fifth aspect and the implementations of the fifth aspect. For technical effects corresponding to any one of the eleventh aspect and the implementations of the eleventh aspect, refer to technical effects corresponding to any one of the second aspect and the implementations of the second aspect, or refer to technical effects corresponding to any one of the fifth aspect and the implementations of the fifth aspect. Details are not described herein again.

According to a twelfth aspect, an embodiment of this application provides a chip, including one or more interface circuits and one or more processors. The interface circuit is configured to: receive a signal from a storage of a terminal device, and send the signal to the processor. The signal includes computer instructions stored in the storage. When the processor executes the computer instructions, the terminal device is enabled to perform the decoding method according to any one of the third aspect or the possible implementations of the third aspect, or the terminal device is enabled to perform the decoding method according to any one of the sixth aspect or the possible implementations of the sixth aspect.

Any one of the twelfth aspect and the implementations of the twelfth aspect corresponds to any one of the third aspect and the implementations of the third aspect, or corresponds to any one of the sixth aspect and the implementations of the sixth aspect. For technical effects corresponding to any one of the twelfth aspect and the implementations of the twelfth aspect, refer to technical effects corresponding to any one of the third aspect and the implementations of the third aspect, or refer to technical effects corresponding to any one of the sixth aspect and the implementations of the sixth aspect. Details are not described herein again.

According to a thirteenth aspect, an embodiment of this application provides a computer-readable storage medium. The computer-readable storage medium stores a computer program. When the computer program runs on a computer or a processor, the computer or the processor is enabled to perform the encoding method according to any one of the second aspect or the possible implementations of the second aspect, or the computer or the processor is enabled to perform the encoding method according to any one of the fifth aspect or the possible implementations of the fifth aspect.

Any one of the thirteenth aspect and the implementations of the thirteenth aspect corresponds to any one of the second aspect and the implementations of the second aspect, or corresponds to any one of the fifth aspect and the implementations of the fifth aspect. For technical effects corresponding to any one of the thirteenth aspect and the implementations of the thirteenth aspect, refer to technical effects corresponding to any one of the second aspect and the implementations of the second aspect, or refer to technical effects corresponding to any one of the fifth aspect and the implementations of the fifth aspect. Details are not described herein again.

According to a fourteenth aspect, an embodiment of this application provides a computer-readable storage medium. The computer-readable storage medium stores a computer program, and when the computer program runs on a computer or a processor, the computer or the processor performs the decoding method according to any one of the third aspect or the possible implementations of the third aspect, or the computer or the processor is enabled to perform the decoding method according to any one of the sixth aspect or the possible implementations of the sixth aspect.

Any one of the fourteenth aspect and the implementations of the fourteenth aspect corresponds to any one of the third aspect and the implementations of the third aspect, or corresponds to any one of the sixth aspect and the implementations of the sixth aspect. For technical effects corresponding to any one of the fourteenth aspect and the implementations of the fourteenth aspect, refer to technical effects corresponding to any one of the third aspect and the implementations of the third aspect, or refer to technical effects corresponding to any one of the sixth aspect and the implementations of the sixth aspect. Details are not described herein again.

According to a fifteenth aspect, an embodiment of this application provides a computer program product.

The computer program product includes computing instructions. When the computing instructions are executed by a computer or a processor, the computer or the processor is enabled to perform the encoding method according to any one of the second aspect or the possible implementations of the second aspect, or the computer or the processor is enabled to perform the encoding method according to any one of the fifth aspect or the possible implementations of the fifth aspect.

Any one of the fifteenth aspect and the implementations of the fifteenth aspect corresponds to any one of the second aspect and the implementations of the second aspect, or corresponds to any one of the fifth aspect and the implementations of the fifth aspect. For technical effects corresponding to any one of the fifteenth aspect and the implementations of the fifteenth aspect, refer to technical effects corresponding to any one of the second aspect and the implementations of the second aspect, or refer to technical effects corresponding to any one of the fifth aspect and the implementations of the fifth aspect. Details are not described herein again.

According to a sixteenth aspect, an embodiment of this application provides a computer program product. The computer program product includes computing instructions. When the computing instructions are executed by a computer or a processor, the computer or the processor is enabled to perform the decoding method according to any one of the third aspect or the possible implementations of the third aspect, or the computer or the processor is enabled to perform the decoding method according to any one of the sixth aspect or the possible implementations of the sixth aspect.

Any one of the sixteenth aspect and the implementations of the sixteenth aspect corresponds to any one of the third aspect and the implementations of the third aspect, or corresponds to any one of the sixth aspect and the implementations of the sixth aspect. For technical effects corresponding to any one of the sixteenth aspect and the implementations of the sixteenth aspect, refer to technical effects corresponding to any one of the third aspect and the implementations of the third aspect, or refer to technical effects corresponding to any one of the sixth aspect and the implementations of the sixth aspect. Details are not described herein again.

According to a seventeenth aspect, an embodiment of this application provides an apparatus for storing a bitstream. The apparatus includes a receiver and at least one storage medium. The receiver is configured to receive a bitstream, and the at least one storage medium is configured to store the bitstream. The bitstream is generated according to any one of the second aspect and the implementations of the second aspect, or is generated according to any one of the fifth aspect and the implementations of the fifth aspect, or is generated according to the seventh aspect, or is generated according to the eighth aspect.

Any one of the seventeenth aspect and the implementations of the seventeenth aspect corresponds to any one of the second aspect and the implementations of the second aspect, or corresponds to any one of the fifth aspect and the implementations of the fifth aspect. For technical effects corresponding to any one of the seventeenth aspect and the implementations of the seventeenth aspect, refer to technical effects corresponding to any one of the second aspect and the implementations of the second aspect, or refer to technical effects corresponding to any one of the fifth aspect and the implementations of the fifth aspect. Details are not described herein again.

According to an eighteenth aspect, an embodiment of this application provides an apparatus for transmitting a bitstream. The apparatus includes a transmitter and at least one storage medium, the at least one storage medium is configured to store a bitstream, and the bitstream is generated according to any one of the second aspect and the implementations of the second aspect, or is generated according to any one of the fifth aspect and the implementations of the fifth aspect, or is generated according to the seventh aspect, or is generated according to the eighth aspect. The transmitter is configured to: obtain the bitstream from the storage medium, and send the bitstream to a device-side device through a transmission medium.

Any one of the eighteenth aspect and the implementations of the eighteenth aspect corresponds to any one of the second aspect and the implementations of the second aspect, or corresponds to any one of the fifth aspect and the implementations of the fifth aspect. For technical effects corresponding to any one of the eighteenth aspect and the implementations of the eighteenth aspect, refer to technical effects corresponding to any one of the second aspect and the implementations of the second aspect, or refer to technical effects corresponding to any one of the fifth aspect and the implementations of the fifth aspect. Details are not described herein again.

According to a nineteenth aspect, an embodiment of this application provides a system for distributing a bitstream. The system includes: at least one storage medium, configured to store at least one bitstream, where the at least one bitstream is generated according to any one of the second aspect and the implementations of the second aspect, or is generated according to any one of the fifth aspect and the implementations of the fifth aspect, or is generated according to the seventh aspect, or is generated according to the eighth aspect; and a streaming media device, configured to: obtain a target bitstream from the at least one storage medium, and send the target bitstream to a device-side device, where the streaming media device includes a content server or a content delivery server.

Any one of the nineteenth aspect and the implementations of the nineteenth aspect corresponds to any one of the second aspect and the implementations of the second aspect, or corresponds to any one of the fifth aspect and the implementations of the fifth aspect. For technical effects corresponding to any one of the nineteenth aspect and the implementations of the nineteenth aspect, refer to technical effects corresponding to any one of the second aspect and the implementations of the second aspect, or refer to technical effects corresponding to any one of the fifth aspect and the implementations of the fifth aspect. Details are not described herein again.

**BRIEF DESCRIPTION OF DRAWINGS**

FIG. 1a is a diagram of an example application scenario;
FIG. 1b is a diagram of an example device-cloud collaboration system;
FIG. 2a is a diagram of an example encoding process;
FIG. 2b is a diagram of an example encoding framework;
FIG. 3a is a diagram of an example decoding process;
FIG. 3b is a diagram of an example decoding framework;
FIG. 4 is a diagram of an example encoding process;
FIG. 5 is a diagram of an example decoding process;
FIG. 6a is a diagram of an example encoding process;
FIG. 6b is a diagram of example model view projection transform;
FIG. 7 is a diagram of an example decoding process;
FIG. 8 is a diagram of an example encoding process;
FIG. 9 is a diagram of an example decoding process;
FIG. 10 is a diagram of an example encoding process;
FIG. 11 is a diagram of an example decoding process;
FIG. 12 is a diagram of an example encoding process;
FIG. 13 is a diagram of an example decoding process; and
FIG. 14 is a diagram of a structure of an example apparatus.

**DESCRIPTION OF EMBODIMENTS**

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims of embodiments of this application, the terms such as "first" and "second" are intended to distinguish between different objects but do not indicate a particular order of the objects. For example, a first target object, a second target object, and the like are used to distinguish between different target objects, but do not indicate a particular order of the objects.

In embodiments of this application, the word such as "example" or "for example" represents giving an example, an illustration, or a description. Any embodiment or design solution described as an "example" or "for example" in embodiments of this application should not be explained as being more preferred or having more advantages than another embodiment or design solution. Specifically, the words such as "example" or "for example" are used to present related concepts in a specific manner.

In descriptions of embodiments of this application, unless otherwise specified, "a plurality of" means two or more. For example, a plurality of processing units are two or more processing units, and a plurality of systems are two or more systems.

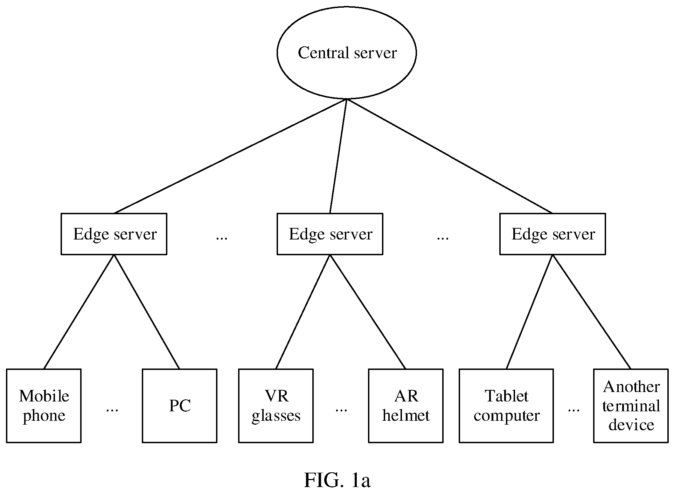

FIG. 1a is a diagram of an example application scenario. The application scenario shown in FIG. 1a is a device-cloud collaborative rendering scenario. This application may be applied to various device-cloud collaboration scenarios such as a cloud game and a VR/AR conference. This is not limited in this application. In this application, the cloud game is used as an example for description.

As shown in FIG. 1a, in a possible manner, a terminal device such as a mobile phone, a personal computer (Personal Computer, PC), VR glasses, an AR helmet, a tablet computer, or another terminal device may send a first rendering parameter to a central server (for example, a game server) through an edge server. Next, the central server may perform rendering processing on a three-dimensional scene based on a rendering parameter (the rendering parameter may include only the first rendering parameter uploaded by the terminal device, or include the first rendering parameter uploaded by the terminal device and a second rendering parameter generated by the central server), to obtain a rendered image (for example, a game image). Then, the central server encodes the rendered image based on some (referred to as a first intermediate rendering result subsequently) of intermediate rendering results generated in a rendering processing process, to obtain a bitstream, and distribute the bitstream to each terminal device through the edge server. Subsequently, the terminal device may perform rendering processing on the three-dimensional scene based on a rendering parameter (the rendering parameter includes the first rendering parameter and a fifth rendering parameter, the fifth rendering parameter is also generated by the terminal device, and the fifth rendering parameter may include a parameter that is the same as the second rendering parameter), and generate a first intermediate rendering result in a rendering processing process. Then, the terminal device decodes the bitstream based on the first intermediate rendering result, to obtain a reconstructed image.

As shown in FIG. 1a, in a possible manner, a terminal device such as a mobile phone, a PC, VR glasses, an AR helmet, a tablet computer, or another terminal device may send a first rendering parameter to a central server through an edge server. Next, the central server may perform rendering processing on a three-dimensional scene based on a rendering parameter (the rendering parameter may include only the first rendering parameter uploaded by the terminal device, or include the first rendering parameter uploaded by the terminal device and a second rendering parameter generated by the server), to obtain a rendered image. Then, the central server encodes the rendered image based on a first intermediate rendering result generated in a rendering processing process, and encodes a second intermediate rendering result (the second intermediate rendering result is a part of the first intermediate rendering result), to obtain a bitstream, and distribute the bitstream to each terminal device through the edge server. Subsequently, the terminal device may perform rendering processing on the three-dimensional scene based on a rendering parameter (the rendering parameter includes the first rendering parameter and a fifth rendering parameter), and generate a third intermediate rendering result (the third intermediate rendering result is a part of a first intermediate rendering result other than a second intermediate rendering result) in a rendering processing process. Then, the terminal device generates the first intermediate rendering result based on the second intermediate rendering result and the third intermediate rendering result, and decodes the bitstream based on the first intermediate rendering result, to obtain a reconstructed image.

As shown in FIG. 1a, in a possible manner, a terminal device such as a mobile phone, a PC, VR glasses, an AR helmet, a tablet computer, or another terminal device may send a first rendering parameter to a central server through an edge server. Next, the central server may perform rendering processing on a three-dimensional scene based on a rendering parameter (the rendering parameter includes the first rendering parameter uploaded by the terminal device and a second rendering parameter generated by the central server), to obtain a rendered image. Then, the central server encodes the rendered image based on a first intermediate rendering result generated in a rendering processing process, to obtain a bitstream, and encode a third rendering parameter (the third rendering parameter includes all or a part of parameters in a second rendering parameter) into a bitstream. Then, the central server distributes the bitstream to each terminal device through the edge server. Subsequently, the terminal device may perform rendering processing on the three-dimensional scene based on a rendering parameter (when the third rendering parameter includes all parameters in the second rendering parameter, the rendering parameter may include a first rendering parameter and the third rendering parameter obtained from the bitstream through parsing; or when the third rendering parameter includes a part of parameters in the second rendering parameter, the rendering parameter may include a first rendering parameter, the third rendering parameter obtained from the bitstream through parsing, and a fourth rendering parameter generated by the terminal device, and the fourth rendering parameter is a parameter other than the third rendering parameter in the second rendering parameter), and generate a first intermediate rendering result in a rendering processing process. Then, the terminal device decodes the bitstream based on the first intermediate rendering result, to obtain a reconstructed image.

As shown in FIG. 1a, in a possible manner, a terminal device such as a mobile phone, a PC, VR glasses, an AR helmet, a tablet computer, or another terminal device may send a first rendering parameter to a central server through an edge server. Next, the central server may perform rendering processing on a three-dimensional scene based on a rendering parameter (including the first rendering parameter uploaded by the terminal device and a second rendering parameter generated by the central server), to obtain a rendered image. Then, the central server encodes the rendered image based on a first intermediate rendering result generated in a rendering processing process, and encodes a second intermediate rendering result, to obtain a bitstream, and encode a third rendering parameter into the bitstream. Then, the central server distributes the bitstream to each terminal device through the edge server. Then, the terminal device may perform rendering processing on the three-dimensional scene based on a rendering parameter (when the third rendering parameter includes all parameters in a second rendering parameter, the rendering parameter may include a first rendering parameter and the third rendering parameter obtained from the bitstream through parsing; or when the third rendering parameter includes a part of parameters in a second rendering parameter, the rendering parameter may include a first rendering parameter, the third rendering parameter obtained from the bitstream through parsing, and a fourth rendering parameter generated by the terminal device), and generate a third intermediate rendering result in a rendering processing process. Then, the terminal device generates a first intermediate rendering result based on a second intermediate rendering result and the third intermediate rendering result, and decodes the bitstream based on the first intermediate rendering result, to obtain a reconstructed image.

In this way, partial or all rendering is performed by the terminal device, and further, the server may not send an intermediate rendering result or send only some intermediate rendering results to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured. In addition, a data amount of a rendering parameter is far less than a data amount of an intermediate rendering result. Therefore, even if the server in this application further sends the rendering parameter to the terminal device, bit rate overheads of a data stream transmitted by the server to the terminal device in this application are less than bit rate overheads of a transmitted data stream in the conventional technology.

For example, the rendering parameter may be all parameters that are input into a graphics rendering engine and that are required for rendering processing by the graphics rendering engine, and may include various parameters used for rendering, position vectors and color vectors of all light sources, a position vector of a player or an observer, information such as a sampling manner of each texture and position coordinates of an object in each scene, a motion track of a moving object, a skeletal animation parameter, and the like. This is not limited in this application. The first rendering parameter and the second rendering parameter may form the rendering parameter (namely, all parameters that are input into the graphics rendering engine and that are required for rendering by the graphics rendering engine). It should be noted that a type of a parameter included in the fifth rendering parameter generated by the terminal device is the same as a type of a parameter included in the second rendering parameter generated by the central server, and precision of the parameter included in the fifth rendering parameter is less than or equal to precision of the parameter included in the second rendering parameter.

For example, the intermediate rendering result may be intermediate data that is used to generate a to-be-displayed image/video and that is generated by the graphics rendering engine in a process of generating the to-be-displayed image (namely, the rendered image)/video (namely, a rendered video). For example, the intermediate rendering result may include but is not limited to a computer graphics motion vector (Computer Graphics Motion Vector, CGMV), an intermediate rendered image (the intermediate rendered image is an image generated before a final rendered image (namely, the foregoing rendered image) is generated, calculation complexity of the intermediate rendered image is lower than calculation complexity of the rendered image, and the intermediate rendered image may be, for example, an intermediate rendered image on which indirect illumination rendering is not performed, an intermediate rendered image on which specular reflection processing is not performed, or an intermediate rendered image on which highlight processing is not performed), a position map (position map), a normal map (normal map), an albedo map (albedo map), a specular intensity map (specular intensity map), a mesh identifier (Mesh ID), a material ID (Material ID) (each material map corresponds to one material ID), a render ID (render ID) (each object (or one three-dimensional object model) corresponds to one render ID), depth information, and the like. This is not limited in this application. The first intermediate rendering result is a part of all intermediate rendering results generated in the rendering processing process, and the second intermediate rendering result and the third intermediate rendering result may form the first intermediate rendering result. It should be noted that a type of an intermediate result included in the first intermediate rendering result generated by the terminal device is the same as a type of an intermediate result included in a first intermediate rendering result generated by the central server, and precision of the intermediate result included in the first intermediate rendering result generated by the terminal device is less than or equal to precision of the intermediate result included in the first intermediate rendering result generated by the central server.

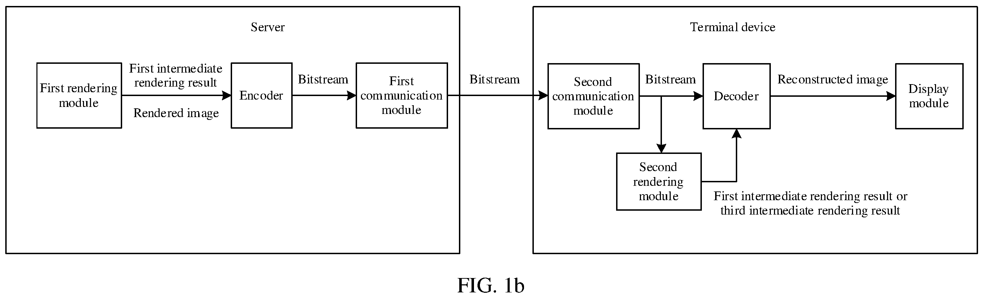

Based on the application scenario in FIG. 1a, this application provides a device-cloud collaboration system, which may be shown in FIG. 1b.

FIG. 1b is a diagram of an example device-cloud collaboration system. The device-cloud collaboration system shown in FIG. 1b may include a server and a terminal device.

As shown in FIG. 1b, for example, the server may be the central server in FIG. 1a, and the server may be a single server, or may be a server cluster. This is not limited in this application.

For example, the server may include a first rendering module, an encoder, and a first communication module. It should be understood that FIG. 1b is merely an example of this application. The server in this application may include more or fewer modules than those shown in FIG. 1b. This is not limited in this application.

For example, the first rendering module may be configured to perform rendering processing on a three-dimensional scene based on a rendering parameter, to obtain a rendered image and an intermediate rendering result.

For example, the encoder may be configured to: encode the rendered image based on a first intermediate rendering result, encode a second intermediate rendering result, and encode a second rendering parameter into a bitstream.

For example, the first communication module may be configured to communicate with another electronic device, for example, may send, to the terminal device, the bitstream output by the encoder.

For example, the terminal device includes but is not limited to a personal computer, a computer workstation, a smartphone, a tablet computer, a server, a smart camera, an intelligent vehicle, another type of cellular phone, a media consumption device, a wearable device (for example, a VR/AR helmet or VR glasses), a set-top box, a game console, and the like.

Still as shown in FIG. 1b, for example, the terminal device may include a second communication module, a second rendering module, a decoder, and a display module. It should be understood that FIG. 1b is merely an example of this application. The terminal device in this application may include more or fewer modules than those shown in FIG. 1b. This is not limited in this application.

For example, the second communication module may be configured to communicate with another electronic device, for example, receive the bitstream sent by the server.

For example, the second rendering module may be configured to perform rendering processing on a three-dimensional scene based on a rendering parameter, to obtain a first intermediate rendering result or a third intermediate rendering result. It should be understood that, the second rendering module may also generate a rendered image, but the rendered image is not used for display by a subsequent display module.

For example, the decoder may be configured to decode the bitstream based on the first intermediate rendering result, to obtain a reconstructed image.

For example, the display module may be configured to display the reconstructed image.

It should be understood that a video coding standard used by the encoder and the decoder is not limited in this application. For example, the video coding standard may include but is not limited to H.264/AVC (Advanced Video Coding, advanced video coding), H.265/HEVC (High Efficiency Video Coding, high efficiency video coding), H.266/VVC (Versatile Video Coding, versatile video coding), AV1 (AOMedia Video 1, where "AOMedia" is a video coding standard developed by the Alliance for Open Media), and the like, and extended standards of these video coding standards. In addition, the video coding standard may further include a new video coding standard and an extended standard that are generated with development of video coding and decoding technologies.

The following describes an encoding process and a decoding process based on FIG. 1a and FIG. 1b.

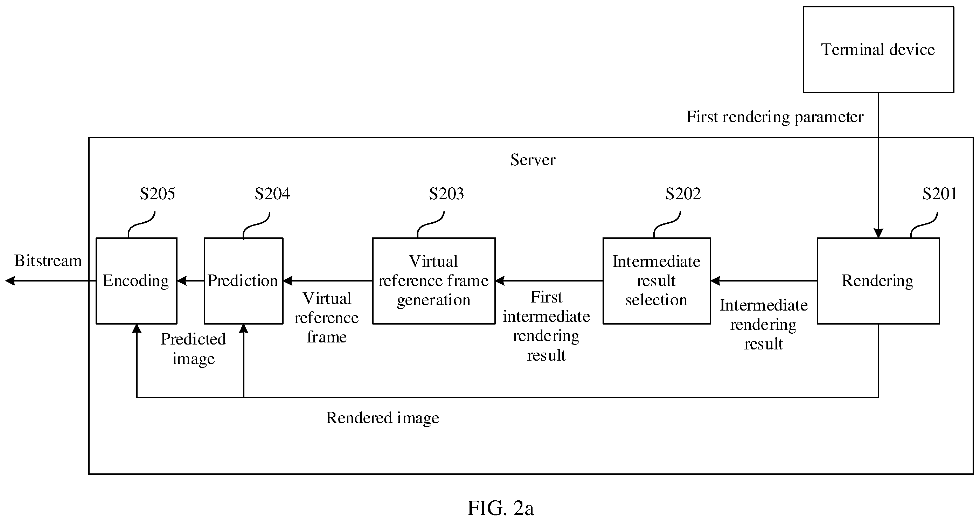

FIG. 2a is a diagram of an example encoding process. In the embodiment in FIG. 2a, a server neither sends a first intermediate rendering result to a terminal device, nor sends a second rendering parameter to the terminal device. In the embodiment in FIG. 2a, an example in which one frame of rendered image is encoded is used for description.

S201: The server performs rendering processing on a three-dimensional scene based on a rendering parameter, to obtain a rendered image, where the rendering parameter includes a first rendering parameter obtained from the terminal device.

For example, the server may obtain the rendering parameter, and then, may input the rendering parameter into a graphics rendering engine. The graphics rendering engine performs rendering processing on the three-dimensional scene based on the rendering parameter, to obtain the rendered image. The graphics rendering engine belongs to the first rendering module in FIG. 1b.

For example, the server may obtain the first rendering parameter (the first rendering parameter is generated by the terminal device) from the terminal device. In a possible manner, when the first rendering parameter generated by the terminal device is all parameters required for rendering processing by the graphics rendering engine, the server may determine the first rendering parameter as the rendering parameter. That is, the rendering parameter obtained by the server may include only the first rendering parameter. In a possible manner, when the first rendering parameter generated by the terminal device is a part of parameters required for rendering processing by the graphics rendering engine, the server may further generate the second rendering parameter, and then determine the first rendering parameter and the second rendering parameter as the rendering parameter. That is, the rendering parameter obtained by the server may include the first rendering parameter and the second rendering parameter. The first rendering parameter and the second rendering parameter are specifically described in a subsequent embodiment.

It should be noted that the server may obtain the first rendering parameter from the terminal device based on a preset periodicity. The preset periodicity may be set based on a requirement. This is not limited in this application. It should be understood that the first rendering parameter obtained by the server from the terminal device each time may be used to render one or more frames of images.

For example, a rendering processing process of the graphics rendering engine may be as follows: An image engine may perform geometric transform, projection transform, perspective transform, and window clipping on a three-dimensional object model in the three-dimensional scene based on the input rendering parameter, and then generate the rendered image based on obtained material and light shadow information.

S202: The server selects a first intermediate rendering result based on an intermediate rendering result generated in the rendering processing process.

For example, the graphics rendering engine in the first rendering module generates the intermediate rendering result in the rendering processing process (the rendering processing process is a time period between a moment at which the graphics rendering engine obtains the rendering parameter and a moment at which the rendered image is obtained), and may select the first intermediate rendering result from the intermediate rendering result. Subsequently, the rendered image may be encoded based on the first intermediate rendering result.

For example, some intermediate rendering results may be selected from the intermediate rendering result as the first intermediate rendering result. For example, in this application, a manner of encoding the rendered image based on the first intermediate rendering result may be: generating a virtual reference frame based on the first intermediate rendering result, and then encoding the rendered image based on the virtual reference frame. Further, some intermediate rendering results that may be used to generate the virtual reference frame may be selected from the intermediate rendering result as the first intermediate rendering result. For example, the CGMV, the intermediate rendered image, and the like are selected as the first intermediate rendering result. This is not limited in this application.

S203: The server generates the virtual reference frame based on the first intermediate rendering result.

For example, the virtual reference frame is a reference frame generated based on prior information, and the prior information includes decoded information in an encoder and information other than a to-be-encoded video/image. The virtual reference frame may be used as supplementary information for inter encoding, to further remove video time domain redundancy.

For example, different first intermediate rendering results correspond to different types. For example, a type of the CGMV is a motion vector type, and a type of the intermediate rendered image is an image type. In a possible manner, a type of the first intermediate rendering result may be determined, and then the virtual reference frame is generated based on the first intermediate rendering result and the type of the first intermediate rendering result. Specifically, for different types of first intermediate rendering results, a manner of generating the virtual reference frame is described below.

It should be noted that S201 and S202 may be performed by the first rendering module in FIG. 1b, and S203 may be performed by the first rendering module in FIG. 1b, or may be performed by a module in the server other than the module shown in FIG. 1b. This is not limited in this application (an example in which the first rendering module performs S203 is used for description in this application). S204 and S205 may be performed by the encoder in FIG. 1b.

S204: The server predicts the rendered image based on the virtual reference frame, to obtain a predicted image.

S205: The server encodes a residual image between the predicted image and the rendered image, and encodes encoded data of the residual image into a bitstream, where the bitstream does not include encoded data of the first intermediate rendering result.

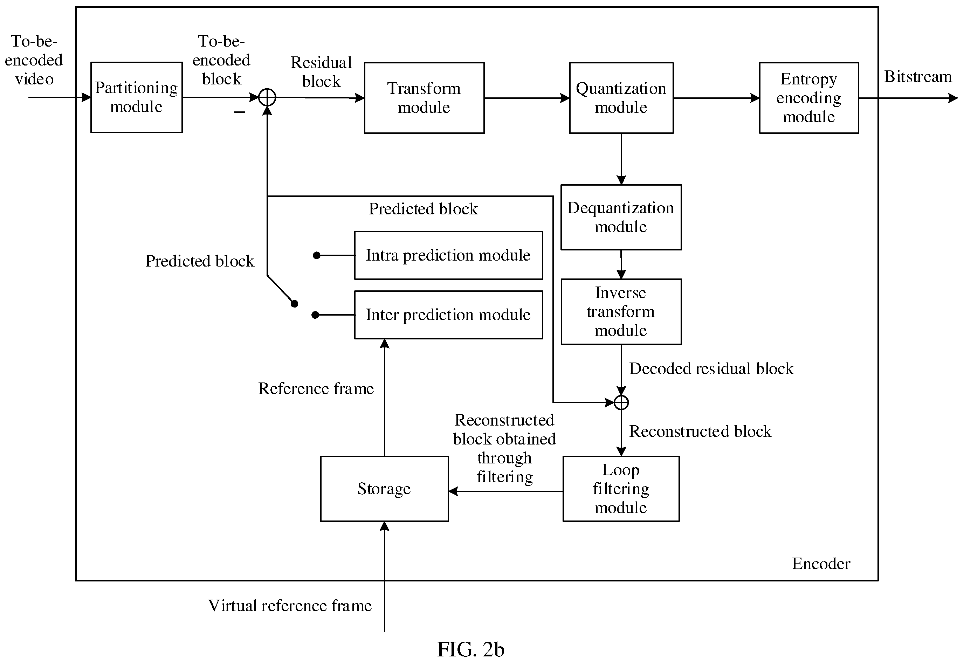

FIG. 2b is a diagram of an example encoding framework. An encoding framework of the encoder in FIG. 1b is shown in the embodiment in FIG. 2b. To-be-encoded video in FIG. 2b is a rendered video, and may include a plurality of frames of rendered images.

As shown in FIG. 2b, for example, the encoder may include a partitioning module, an intra prediction module, an inter prediction module, a transform module, a quantization module, an entropy encoding module, a dequantization module, an inverse transform module, a loop filtering module, and a storage.

For example, after generating a virtual reference frame, a first rendering module may insert the virtual reference frame into a reference frame list of a storage, and increase a length of the reference frame list by 1.

Still as shown in FIG. 2b, an encoding process of the encoder may be as follows: After obtaining a to-be-encoded video, the partitioning module of the encoder may partition each frame of rendered image in the to-be-encoded video, to obtain a to-be-encoded block. For each to-be-encoded block, a decision module (not shown in FIG. 2b) may determine whether to perform inter prediction or intra prediction on the to-be-encoded block.

When intra prediction is determined, the intra prediction module may perform intra prediction, to determine a predicted block corresponding to the to-be-encoded block. After the predicted block is obtained, a residual block between the to-be-encoded block and the predicted block may be determined. Then, the residual block is input into the transform module, and the transform module transforms the residual block, to obtain a transform result and output the transform result to the quantization module. Then, the quantization module may quantize the transform result, to obtain a quantization result, and output the quantization result to the entropy encoding module. Then, the entropy encoding module may perform entropy encoding on the quantization result, to obtain encoded data of the residual block, and encode the encoded data of the residual block into a bitstream.

For example, the quantization module may further output the quantization result to the dequantization module, and the dequantization module performs dequantization, to obtain a dequantization result, and output the dequantization result to the inverse transform module. Next, the inverse transform module performs inverse transform on the dequantization result, to obtain a decoded residual block. Then, the decoded residual block may be superimposed with the predicted block output by the intra prediction module, to obtain a reconstructed block. Subsequently, the reconstructed block is input into the loop filtering module, and the loop filtering module performs loop filtering on the reconstructed block, to obtain a reconstructed block obtained through filtering and output the reconstructed block obtained through filtering to the storage. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the storage for storage.)

When inter prediction is determined, the inter prediction module may perform intra prediction, to determine a predicted block corresponding to the to-be-encoded block.

In a possible manner, the inter prediction module may select the virtual reference frame from a reference frame sequence in the storage as a reference frame of the rendered image. For a to-be-encoded block in the rendered image, a matched predicted block (namely, the foregoing predicted image) may be searched for from the virtual reference frame.

In a possible manner, the inter prediction module may use both the virtual reference frame and a raw reference frame in the reference frame sequence in the storage as candidate reference frames of the rendered image. The raw reference frame is a reconstructed image. For a to-be-encoded block in the rendered image, inter prediction may be performed based on a plurality of candidate reference frames, to determine a plurality of predicted blocks. One predicted block is correspondingly determined for one candidate reference frame. An optimal predicted block may be selected from the plurality of predicted blocks (for example, a predicted block with a minimum rate-distortion cost may be determined as the optimal predicted block (namely, the foregoing predicted image) by using the rate-distortion cost as an evaluation standard).

After the predicted block is obtained, a residual block (namely, the foregoing residual image) between the to-be-encoded block and the predicted block may be determined. Then, the residual block is input into the transform module, and the transform module transforms the residual block, to obtain a transform result and output the transform result to the quantization module. Then, the quantization module may quantize the transform result, to obtain a quantization result, and output the quantization result to the entropy encoding module. Then, the entropy encoding module may perform entropy encoding on the quantization result, to obtain encoded data of the residual block, and encode the encoded data of the residual block into a bitstream (namely, the bitstream obtained in S205).

For example, the quantization module may further output the quantization result to the dequantization module, and the dequantization module performs dequantization, to obtain a dequantization result, and output the dequantization result to the inverse transform module. Next, the inverse transform module performs inverse transform on the dequantization result, to obtain a decoded residual block. Then, the decoded residual block may be superimposed with the predicted block output by the intra prediction module, to obtain a reconstructed block. Subsequently, the reconstructed block is input into the loop filtering module, and the loop filtering module performs loop filtering on the reconstructed block, to obtain a reconstructed block obtained through filtering and output the reconstructed block obtained through filtering to the storage. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the storage for storage.)

For example, after the rendered image is encoded, the virtual reference frame in the reference frame list in the storage may be deleted, and a length of the reference frame list is decreased by 1, to avoid a too long reference frame list and reduce encoding efficiency.

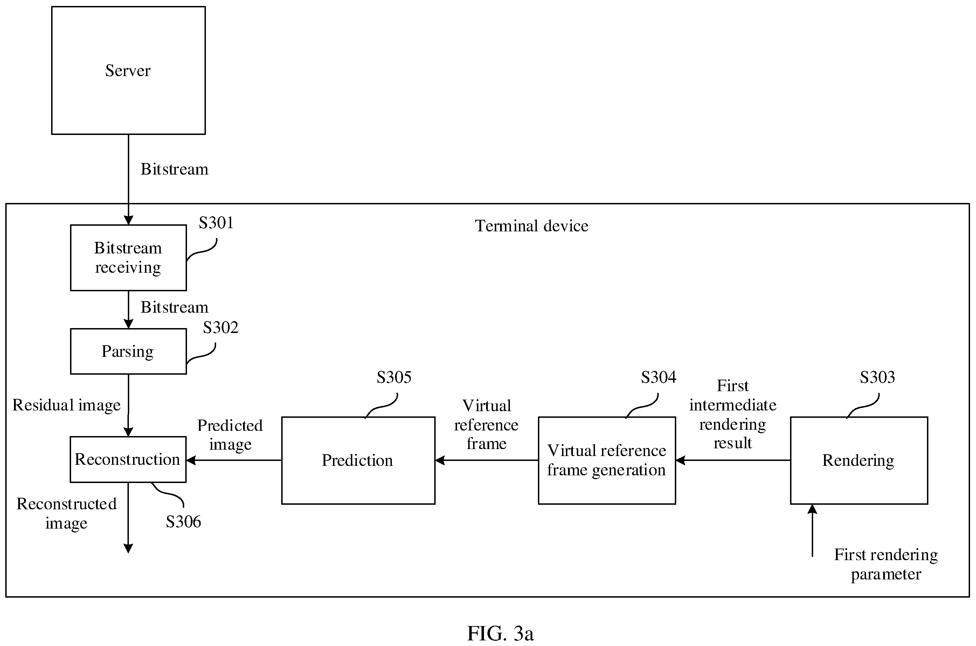

FIG. 3a is a diagram of an example decoding process. FIG. 3a shows a decoding process corresponding to FIG. 2a. In the embodiment in FIG. 3a, a terminal device performs rendering processing based on a locally generated rendering parameter, and generates a first intermediate rendering result. In the embodiment in FIG. 3a, an example in which one frame of image is decoded is used for description.

S301: The terminal device receives a bitstream.

For example, the terminal device may receive the bitstream after a server sends the bitstream.

S302: The terminal device parses the bitstream, to obtain a parsing result, where the parsing result includes a residual image corresponding to a current frame.

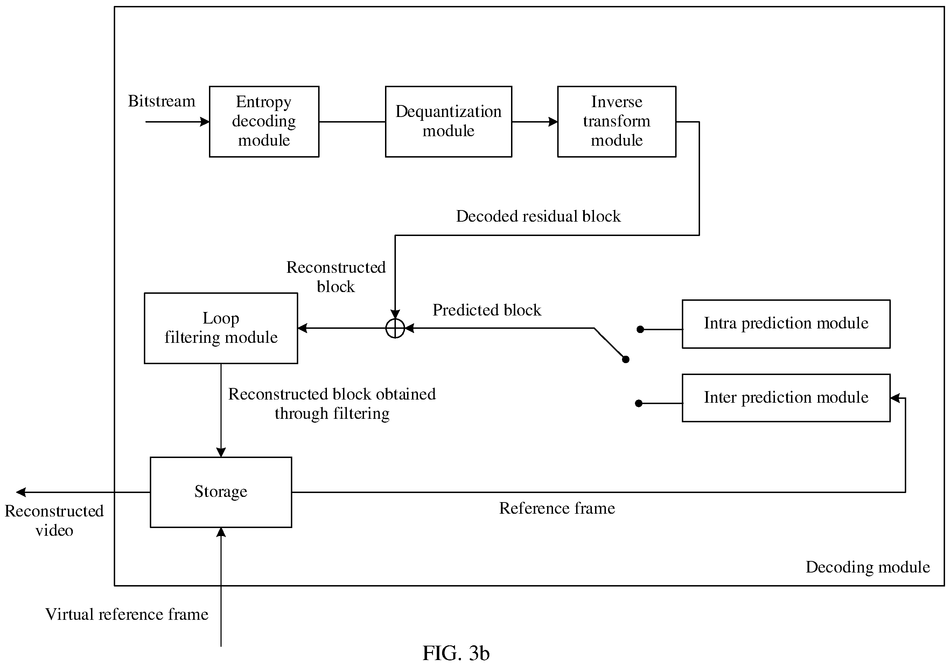

FIG. 3b is a diagram of an example decoding framework. A decoding framework of the decoder in FIG. 1b is shown in the embodiment in FIG. 3b.

As shown in FIG. 3b, for example, the decoder may include an entropy decoding module, a dequantization module, an inverse transform module, an intra prediction module, an inter prediction module, a loop filtering module, and a storage.

For example, after receiving the bitstream, the terminal device may parse the bitstream, to obtain the parsing result. A parsing process may be as follows: Encoded data of a residual block is extracted from the bitstream, and then the encoded data of the residual block is input into the entropy decoding module. The entropy decoding module performs entropy decoding on the encoded data of the residual block, to obtain entropy decoded data. Next, the entropy decoded data may be input into the dequantization module, and the dequantization module performs dequantization, to obtain dequantized data, and input the dequantized data into the inverse transform module. Then, the inverse transform module performs inverse transform on the dequantized data, to obtain a decoded residual block (namely, the residual image corresponding to the current frame in S302).

It should be understood that, when an encoder side performs lossy encoding on the residual block, a residual block obtained by a decoder side through parsing is different from the residual block encoded by the encoder side. When an encoder side performs lossless encoding on the residual block, a residual block obtained by a decoder side through parsing is the same as the residual block encoded by the encoder side.

It should be noted that bitstream description information used to describe the bitstream may be further extracted from the bitstream. In this case, operations such as entropy decoding, dequantization, and inverse transform do not need to be performed on the bitstream description information. The bitstream description information may be used for the subsequent decoding process.

S303: The terminal device performs rendering processing on a three-dimensional scene based on a rendering parameter corresponding to the current frame, and generates the first intermediate rendering result in a rendering processing process, where the rendering parameter includes a first rendering parameter generated by the terminal device.

For example, after the residual image corresponding to the current frame is obtained through parsing, a second rendering module (which may be a graphics rendering engine included in the second rendering module) may perform rendering processing on the three-dimensional scene based on the rendering parameter corresponding to the current frame.

For example, when the first rendering parameter uploaded by the terminal device to the server is all parameters required for rendering processing by the graphics rendering engine, the second rendering module may perform rendering processing on the three-dimensional scene based on a first rendering parameter corresponding to the current frame. When the first rendering parameter uploaded by the terminal device is a part of parameters required for rendering processing by the graphics rendering engine, the terminal device may further generate a fifth rendering parameter, and then the second rendering module may perform rendering processing on the three-dimensional scene based on the first rendering parameter corresponding to the current frame and the fifth rendering parameter.

It should be noted that a type of a parameter included in the fifth rendering parameter generated by the terminal device is the same as a type of a parameter included in a second rendering parameter generated by the central server; and precision of the parameter included in the fifth rendering parameter is less than or equal to precision of the parameter included in the second rendering parameter.

It should be noted that a type of an intermediate result included in the first intermediate rendering result generated by the terminal device is the same as a type of an intermediate result included in a first intermediate rendering result generated by the server; and precision of the intermediate result included in the first intermediate rendering result generated by the terminal device is less than or equal to precision of the intermediate result included in the first intermediate rendering result generated by the server.

It should be noted that a rendered image can still be obtained when the graphics rendering engine of the terminal device performs rendering processing. Because computational power of the terminal device is lower than computational power of the server, image quality (the image quality may include subjective quality and objective quality (the objective quality is, for example, rate-distortion performance or a PSNR (Peak Signal to Noise Ratio, peak signal to noise ratio))) of the rendered image obtained by performing rendering processing by the graphics rendering engine of the terminal device is lower than image quality of a rendered image obtained by performing rendering processing by a graphics rendering engine of the server. Therefore, the terminal device may not display the rendered image obtained by performing rendering processing by the graphics rendering engine of the terminal device, but display a reconstructed image obtained by decoding the bitstream.

S304: The terminal device generates a virtual reference frame based on the first intermediate rendering result.

For example, for S304, refer to the descriptions of S203. Details are not described herein again.

For example, after generating the virtual reference frame, the terminal device may reconstruct the residual image corresponding to the current frame based on the virtual reference frame, to obtain a reconstructed image. Image quality of the reconstructed image is higher than that of the rendered image obtained by performing rendering processing by the graphics rendering engine of the terminal device. Subsequently, the terminal device may display the reconstructed image.

It should be noted that S301 to S303 may be performed by the second rendering module in the terminal device, and S304 may be performed by the second rendering module in the terminal device, or may be performed by a module in the terminal device other than the module shown in FIG. 1b (an example in which the second rendering module performs S304 is used for description in this application). S305 and S306 may be performed by the decoder in FIG. 1b.

S305: The terminal device predicts the current frame based on the virtual reference frame, to obtain a predicted image.

S306: The terminal device performs reconstruction based on the predicted image and the residual image, to obtain the reconstructed image of the current frame.

As shown in FIG. 3b again, for example, after generating the virtual reference frame, the second rendering module may insert the virtual reference frame into a reference frame list of a storage, and increase a length of the reference frame list by 1.

As shown in FIG. 3b again, for example, when intra prediction is determined based on the bitstream description information obtained from the bitstream through parsing, the intra prediction module may perform intra prediction, to obtain a predicted block. Then, the decoded residual block may be superimposed with the predicted block, to obtain a reconstructed block. Then, loop filtering may be performed on the reconstructed block, to obtain a reconstructed block obtained through filtering and output the reconstructed block obtained through filtering to the storage. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the storage for storage.)

As shown in FIG. 3b again, for example, when inter prediction is determined based on the bitstream description information obtained from the bitstream through parsing, the inter prediction module may perform inter prediction, to obtain a predicted block (namely, the predicted image in S305).

In a possible manner, when the inter prediction module determines, based on the bitstream description information obtained from the bitstream through parsing, that a reference frame is a virtual reference frame, the inter prediction module may select a corresponding virtual reference frame from the reference frame sequence in the storage as a reference frame; and then, may determine the predicted block based on the virtual reference frame.

In a possible manner, when the inter prediction module determines, based on the bitstream description information obtained from the bitstream through parsing, that a reference frame is a raw reference frame, the inter prediction module may select a corresponding raw reference frame from the reference frame sequence in the storage as a reference frame; and then, may determine the predicted block based on the raw reference frame.

After the predicted block is obtained, the residual block obtained through decoding may be superimposed with the predicted block, to obtain a reconstructed block. Then, loop filtering may be performed on the reconstructed block, to obtain a reconstructed block obtained through filtering and output the reconstructed block obtained through filtering to the storage. (After obtaining the reconstructed block obtained through filtering, the loop filtering module may splice the reconstructed block obtained through filtering at a corresponding position of a to-be-reconstructed image; and after obtaining one frame of reconstructed image, the loop filtering module may output the reconstructed image to the storage.)

It should be understood that the terminal device may further generate the bitstream based on the first rendering parameter, and then send the bitstream to the server based on a preset periodicity. In this way, the server may obtain the first rendering parameter. In addition, because a data amount of the first rendering parameter is small, the terminal device may encode the first rendering parameter, encode encoded data of the first rendering parameter into the bitstream, and then send the bitstream to the server. Alternatively, the terminal device may not encode the first rendering parameter, but directly encode the first rendering parameter into the bitstream, and send the bitstream to the server. This is not limited in this application.

In this way, in this application, all rendering is performed by the terminal device, and further, the server may not send an intermediate rendering result to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

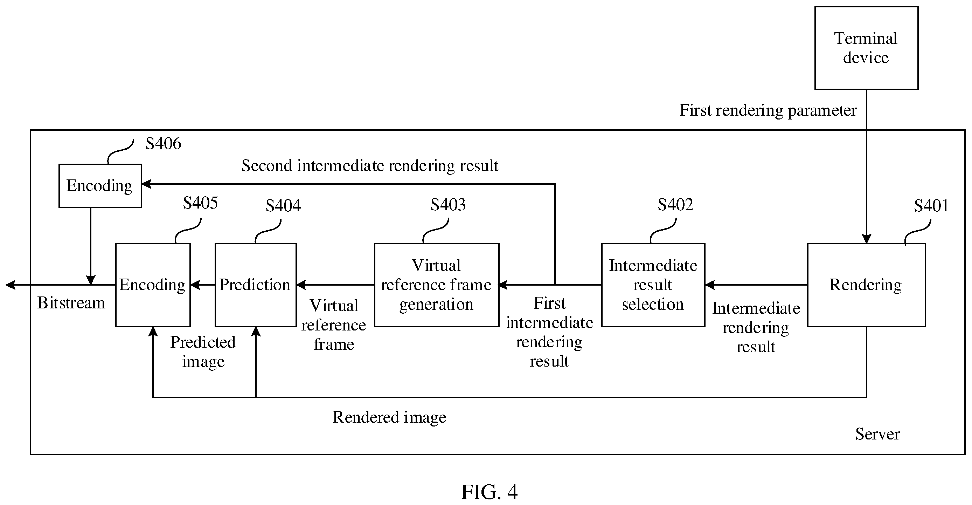

FIG. 4 is a diagram of an example encoding process. In the embodiment in FIG. 4, a server sends a part (referred to as a second intermediate rendering result subsequently) of a first intermediate rendering result to a terminal device, and does not send a second rendering parameter to the terminal device. In the embodiment in FIG. 4, an example in which one frame of rendered image is encoded is used for description.

S401: The server performs rendering processing on a three-dimensional scene based on a rendering parameter, to obtain a rendered image, where the rendering parameter includes a first rendering parameter obtained from the terminal device.

S402: The server selects a first intermediate rendering result based on an intermediate rendering result generated in a rendering processing process.

S403: The server generates a virtual reference frame based on the first intermediate rendering result.

S404: The server predicts the rendered image based on the virtual reference frame, to obtain a predicted image.

S405: The server encodes a residual image between the predicted image and the rendered image, and encodes encoded data of the residual image into a bitstream.

For example, for S401 to S405, refer to the descriptions of S201 to S205. Details are not described herein again.

S406: The server encodes the second intermediate rendering result, and encodes encoded data of the second intermediate rendering result into the bitstream, where the second intermediate rendering result is a part of the first intermediate rendering result.

For example, S406 may be performed by the encoder in FIG. 1b. To be specific, the encoder encodes the second intermediate rendering result, and encodes the encoded data of the second intermediate rendering result into the bitstream.

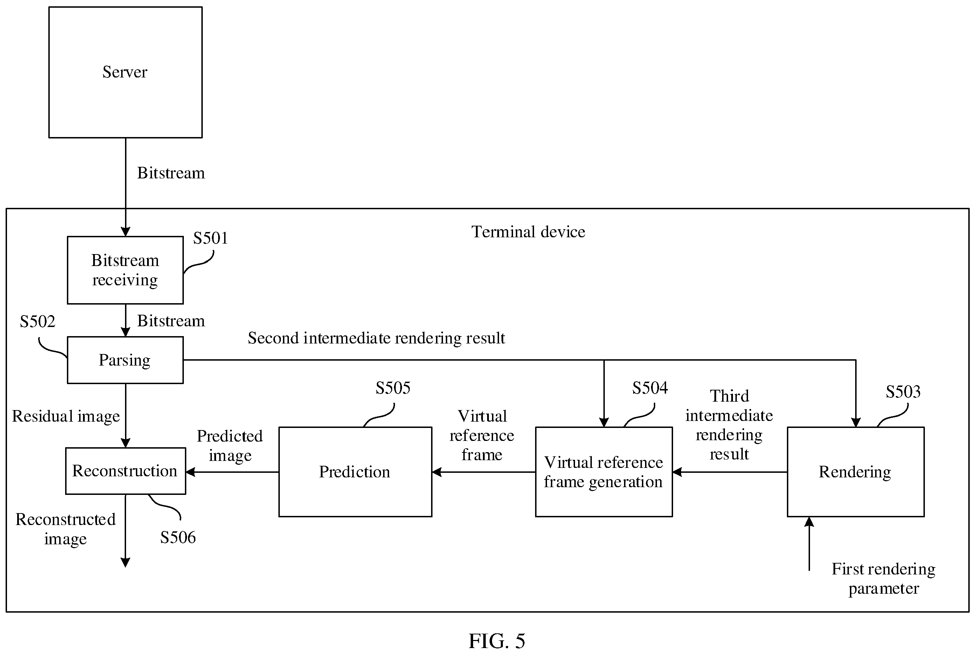

FIG. 5 is a diagram of an example decoding process. FIG. 5 shows a decoding process corresponding to FIG. 4. In the embodiment in FIG. 5, the terminal device performs rendering processing based on a locally generated rendering parameter, and generates a third intermediate rendering result (the third intermediate rendering result and the second intermediate rendering result may form the first intermediate rendering result). In the embodiment in FIG. 5, an example in which one frame of image is decoded is used for description.

S501: The terminal device receives the bitstream.

S502: The terminal device parses the bitstream, to obtain a parsing result, where the parsing result includes a residual image corresponding to a current frame and a second intermediate rendering result corresponding to the current frame.

For example, for S502, refer to the descriptions of S302. Details are not described herein again.

For example, in the parsing process, encoded data of the second intermediate rendering result may be further extracted from the bitstream. Then, the encoded data of the second intermediate rendering result may be sequentially input into an entropy decoding module, a dequantization module, and an inverse transform module, to obtain the second intermediate rendering result.

It should be noted that, when the server performs lossless compression on the second intermediate rendering result, the second intermediate rendering result obtained by the terminal device through parsing is the same as the second intermediate rendering result encoded by the encoder of the server. When the server performs lossy compression on the second intermediate rendering result, the second intermediate rendering result obtained by the terminal device through parsing is different from the second intermediate rendering result encoded by the encoder of the server.

S503: The terminal device performs rendering processing on the three-dimensional scene based on a rendering parameter corresponding to the current frame, and generates the third intermediate rendering result based on the second intermediate rendering result in a rendering processing process, where the rendering parameter includes a first rendering parameter generated by the terminal device.

For example, in the rendering processing process, a second rendering module of the terminal device may generate a part of the first intermediate rendering result other than the second intermediate rendering result, namely, the third intermediate rendering result. For details, refer to the descriptions of S303. Details are not described herein again. Then, the second rendering module may combine the second intermediate rendering result and the third intermediate rendering result, to obtain the first intermediate rendering result.

It should be understood that, because the third intermediate rendering result is generated by the terminal device, a type of an intermediate result included in the first intermediate rendering result obtained by the terminal device through combination is the same as a type of an intermediate result included in a first intermediate rendering result generated by the server. Precision of the intermediate result included in the first intermediate rendering result obtained by the terminal device through combination is less than or equal to precision of the intermediate result included in the first intermediate rendering result generated by the server.

S504: The terminal device generates a virtual reference frame based on the first intermediate rendering result. The first intermediate rendering result may include the second intermediate rendering result and the third intermediate rendering result.

S505: The terminal device predicts the current frame based on the virtual reference frame, to obtain a predicted image.

S506: The terminal device performs reconstruction based on the predicted image and the residual image, to obtain a reconstructed image of the current frame.

For example, for S504 to S506, refer to the descriptions of S304 to S306. Details are not described herein again.

In this way, in this application, partial rendering is performed by the terminal device, and further, the server may send some intermediate rendering results to the terminal device. Therefore, in this application, an interaction delay can be reduced while it is ensured that bit rate overheads of a data stream transmitted by the server to the terminal device are effectively reduced. In addition, a correlation between an intermediate rendering result and the rendered image is strong. Therefore, in this application, the rendered image is encoded based on the intermediate rendering result, so that image reconstruction quality can be ensured.

The following describes an encoding process and a decoding process by using an example in which a first intermediate rendering result is a CGMV and a server sends a part of the CGMV to a terminal device.

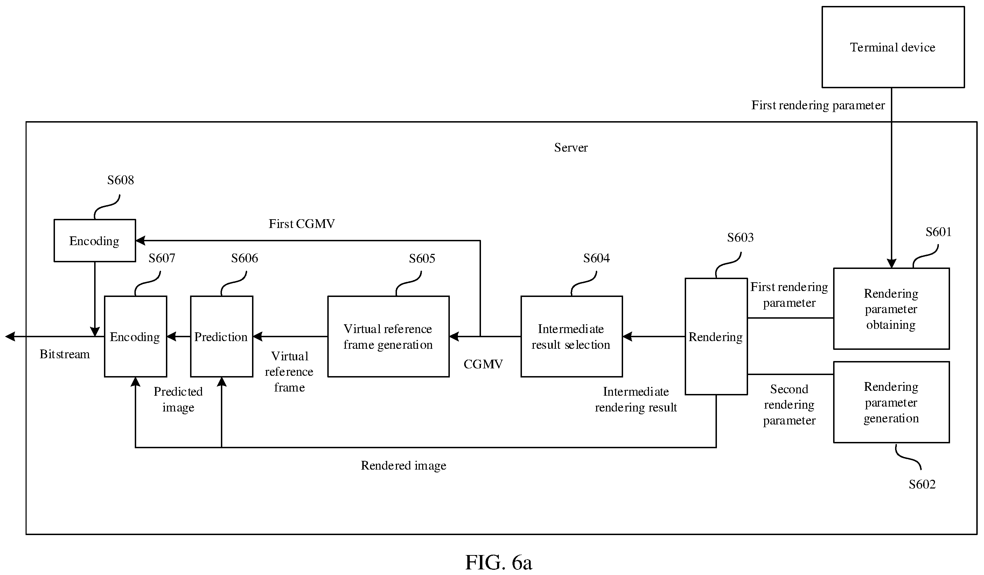

FIG. 6a is a diagram of an example encoding process. In the embodiment in FIG. 6a, the server sends the part of the CGMV to the terminal device, and does not send a second rendering parameter to the terminal device. In the embodiment in FIG. 6a, an example in which one frame of rendered image is encoded is used for description.

S601: The server receives a first rendering parameter sent by the terminal device.

For example, the first rendering parameter may include a camera parameter. The camera parameter may include but is not limited to parameters such as a view projection matrix, a camera dynamic range, a focal length, an aperture size, and a depth of field.

S602: The server generates the second rendering parameter.

For example, the server may load scene geometry information (for example, vertex coordinates of a triangle mesh), material data (for example, a material map and a material generation function), texture data (for example, a texture map), and the like that are prestored in a storage (for example, a hard disk or a memory), to obtain the second rendering parameter.

S603: The server performs rendering processing on a three-dimensional scene based on the first rendering parameter and the second rendering parameter, to obtain a rendered image.

S604: The server selects the CGMV based on an intermediate rendering result generated in a rendering processing process.

For example, the server may input the first rendering parameter and the second rendering parameter into a graphics rendering engine (for example, V-Ray, Unreal, or Unity), and the graphics rendering engine performs rendering processing, to obtain the rendered image.

For example, in the rendering processing process, the graphics rendering engine may generate the CGMV and another intermediate rendering result, and may select the CGMV as the first intermediate rendering result. The CGMV may include a CGMV of a static object and a CGMV of a dynamic object.

For example, a process in which the graphics rendering engine generates a static CGMV may be as follows: For each point (which may include a vertex on a triangle mesh (which is also referred to as a mesh (mesh)) and a point (which is subsequently referred to as another point (the another point may be obtained through vertex interpolation)) that is not a vertex on the triangle mesh) on the triangle mesh, a projection result (namely, a sample of each vertex on a screen) of each point in a model view projection (Model View Projection) matrix $M_{t1}$ at a moment t1 (a current moment) is calculated, and the projection result is rasterized (Rasterize).

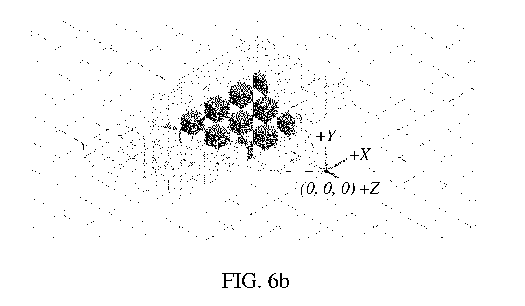

FIG. 6b is a diagram of example model view projection transform.

As shown in FIG. 6b, for example, (0, 0, 0) in FIG. 6b is a camera origin. +Y indicates a positive direction of a Y axis, +X indicates a positive direction of an X axis, and +Z indicates a positive direction of a Z axis.

For example, in the three-dimensional scene, a point located on a triangle mesh between a near plane and a far plane of a viewing frustum (the camera origin is used as a vertex) may be projected onto the screen. In FIG. 6b, a point on a gray cube may be projected onto the screen. A parameter (for example, a horizontal angle of view, a vertical angle of view, and a diagonal angle of view) of the viewing frustum may be determined based on the camera parameter in the first rendering parameter. The model view projection matrix $M_{t1}$ at the moment t1 may be used to determine a corresponding sample onto which the point on the triangle mesh located between the near plane and the far plane of the viewing frustum (the camera origin is used as a vertex) is projected on the screen.

For example, a process of rasterizing (Rasterize) the projection result may be as follows:

First, an array ZBuffer is preset for the sample corresponding to the point on the triangle mesh between the near plane and the far plane of the viewing frustum (the camera origin is used as a vertex). An initial value of a position of each sample in the array ZBuffer is set to infinity (that is, infinitely far away from a camera).

Then, each sample [x, y] in the array ZBuffer is traversed, and a distance z from each sample to the camera, namely, a distance from a point corresponding to each sample on the triangle mesh to the camera is calculated. When the sample corresponds to a vertex on the triangle mesh, a corresponding distance may be directly calculated; or when the sample corresponds to another point on the triangle mesh, a corresponding distance may be obtained by performing interpolation based on a distance from a sample corresponding to a vertex to the camera. If z is less than a value in ZBuffer[x, y], the value in ZBuffer[x,y] is updated to the distance z of the point.

Then, based on a far plane distance value $z_{far}$ and a near plane distance value $z_{near}$ in the camera parameter, a distance value corresponding to each sample in the array ZBuffer is normalized, to obtain a depth value D whose change range is between [0, 1], and all depth values D form a depth map (depth map). A normalization manner is as follows:

$$D = \frac{\dfrac{1}{z} - \dfrac{1}{z_{near}}}{\dfrac{1}{z_{far}} - \dfrac{1}{z_{near}}}$$

Then, based on a view projection matrix $M_{t2}$ at a moment t2 (a rendering moment corresponding to any reconstructed image, where the graphics rendering engine does not necessarily perform rendering processing based on an image arrangement sequence in video data, and therefore, the encoder does not necessarily perform encoding based on the image arrangement sequence in the video data, and further, the reconstructed image may be a reconstructed image of an encoded image before a to-be-rendered image (an image that needs to be rendered at the moment t1) in the video data, or may be a reconstructed image of an encoded image after the to-be-rendered image) and the view projection matrix $M_{t1}$ at the current moment, the CGMV of the static object between the moment t1 and the moment t2 is calculated, and is denoted as a CGMV 1:

$$CGMV1 = D * \left( M_{t1} - M_{t2} \right)$$

It should be understood that CGMVs of the static object between the moment t1 and N moments t2 may be generated, to obtain N CGMVs 1. Each CGMV 1 may correspond to one moment t2. N is a positive integer. For example, N is a positive integer less than 16. This is not limited in this application.

For example, a process in which the graphics rendering engine generates a dynamic CGMV may be as follows:

For example, a velocity buffer (velocity buffer) is maintained for a moving mesh (namely, a triangle mesh of the dynamic object). The velocity buffer records coordinates $(x_1, y_1, z_1)$ of each vertex on each moving mesh at the moment t1, and records coordinates of each vertex on each moving mesh at the moment t2 on the mesh as $(x_2, y_2, z_2)$.

First, a motion vector $P = (x_1, y_1, z_1) - (x_2, y_2, z_2)$ of each vertex on each moving mesh at the moment t1 and the moment t2 may be calculated.

Next, P is multiplied by the view projection matrix at the moment t1, to obtain a CGMV of a sample corresponding to each vertex on each moving mesh, which is denoted as a CGMV 2. $CGMV2 = P*M_{t1}$.

Finally, the CGMV 2 is rasterized. For details, refer to the foregoing descriptions. Details are not described herein again. In addition, interpolation may be performed on another point on the triangle mesh, to obtain a CGMV 2 of each sample.

It should be understood that CGMVs of the dynamic object between the moment t1 and N moments t2 may be generated, to obtain N CGMVs 2. Each CGMV 2 may correspond to one moment t2.

For example, after the CGMV of the dynamic object and the CGMV of the static object are obtained, S605 and S608 may be separately performed.

S605: The server generates a virtual reference frame based on the CGMV and the reconstructed image.

For example, a type of the CGMV is a motion vector type. The virtual reference frame is generated based on the first intermediate rendering result and the reconstructed image when a type of the first intermediate rendering result is the motion vector type.

For example, the server may generate the virtual reference frame based on the CGMV of the dynamic object and the CGMV of the static object. For example, the server may combine the CGMV of the dynamic object and the CGMV of the static object based on a sample, to obtain a complete CGMV (namely, the first intermediate rendering result); and then generate the virtual reference frame based on the complete CGMV. For example, a CGMV 1 of the static object between the moment t1 and an $i^{th}$ (i is a positive integer between 1 and N, including 1 and N) moment t2 and a CGMV 2 of the dynamic object between the moment t1 and the $i^{th}$ moment t2 may be combined, to obtain a complete CGMV (namely, an $i^{th}$ complete CGMV) between the moment t1 and the $i^{th}$ moment t2. In this way, N complete CGMVs may be obtained, and N virtual reference frames may be generated.

For example, a process in which the server generates the virtual reference frame based on the $i^{th}$ complete CGMV may be as follows:

First, the virtual reference frame may be initialized. A size of the virtual reference frame is the same as a size of a raw reference frame.

Then, reconstructed image information is obtained. The reconstructed image information includes but is not limited to luminance and chrominance information, a bit depth, a width, and a height.

Then, a second sample that is in the $i^{th}$ reconstructed image (namely, a reconstructed image corresponding to the $i^{th}$ moment t2) and that corresponds to a first sample in the initialized virtual reference frame is determined based on the $i^{th}$ complete CGMV; and a pixel value corresponding to the first sample in the initialized virtual reference frame is set based on a pixel value of the second sample in the $i^{th}$ reconstructed image.

For example, for a first sample in the virtual reference frame, if it is determined, based on the $i^{th}$ complete CGMV, that a position of the first sample in the $i^{th}$ reconstructed image exceeds a boundary of the $i^{th}$ reconstructed image, in a possible manner, luminance of the first sample may be set to a first preset value, and a chrominance value may be set to a second preset value. The first preset value may be set to, for example, 16 based on a requirement, and the second preset value may be set to, for example, 128 based on a requirement. This is not limited in this application. In a possible manner, the pixel value of the first sample may be set to an average pixel value of the $i^{th}$ reconstructed image.

For example, if it is determined, based on the $i^{th}$ complete CGMV, that the position of the first sample in the $i^{th}$ reconstructed image does not exceed the boundary of the $i^{th}$ reconstructed image, the pixel value of the second sample that corresponds to the first sample and that is in the $i^{th}$ reconstructed image is obtained, and the pixel value is used as the pixel value of the first sample.

S606: The server predicts the rendered image based on the virtual reference frame, to obtain a predicted image.

S607: The server encodes a residual image between the predicted image and the rendered image, and encodes encoded data of the residual image into a bitstream.

For example, when N=1, that is, there is one virtual reference frame, the one virtual reference frame may be used as a reference frame for inter prediction, to determine a predicted block matching a to-be-encoded block in the rendered image; and a residual block between the to-be-encoded block and the predicted block is encoded, to obtain the bitstream.

For example, when N is greater than 1, that is, there are a plurality of virtual reference frames, the plurality of virtual reference frames may be used as candidate reference frames for inter prediction, to determine a plurality of predicted blocks matching the to-be-encoded blocks in the rendered image; and one predicted block is correspondingly determined for one virtual reference frame. Next, a residual block between an optimal predicted block and the to-be-encoded block is selected for encoding, to obtain the bitstream.

For example, regardless of whether N is equal to 1 or greater than 1, the virtual reference frame and the raw reference frame may be used as candidate reference frames for inter prediction, to determine a plurality of predicted blocks matching the to-be-encoded blocks in the rendered image. One predicted block is correspondingly determined for one virtual reference frame/one raw reference frame. Next, a residual block between an optimal predicted block and the to-be-encoded block is selected for encoding, to obtain the bitstream.

For example, bitstream description information may include a frame identifier. When the residual block is determined based on the predicted block determined based on the raw reference frame and the to-be-encoded block, the frame identifier is a frame identifier of the raw reference frame. When the residual block is determined based on the predicted block determined based on the virtual reference frame and the to-be-encoded block, the frame identifier is a frame identifier of the virtual reference frame.

S608: The server encodes a first CGMV, and encodes encoded data of the first CGMV into the bitstream.

For example, after generating a complete CGMV, the server may encode a part of the CGMV. It should be understood that the server generates N complete CGMVs. When a predicted block used to calculate the residual block is a block in the $i^{th}$ virtual reference frame, a part of a complete CGMV used to determine the $i^{th}$ virtual reference frame may be encoded. The part of the CGMV may be referred to as the first CGMV, namely, a second intermediate rendering result.

In a possible manner, the first CGMV is a CGMV of the static object, and further, the server may send an encoded CGMV of the static object to the terminal device. In this way, the terminal device does not need to calculate the CGMV of the static object, thereby saving computational power of the terminal device.

In a possible manner, the first CGMV is a CGMV of the dynamic object, and further, the server may send an encoded CGMV of the dynamic object to the terminal device. In this way, the terminal device does not need to calculate the CGMV of the dynamic object, thereby saving computational power of the terminal device. In addition, a calculation amount of calculating the CGMV of the dynamic object is greater than a calculation amount of calculating the CGMV of the static object. Therefore, the CGMV of the dynamic object is encoded and sent to the terminal device, to save more computational power of the terminal device.

For example, the CGMV of the dynamic object may include the CGMV of the rigid dynamic object and/or the CGMV of the non-rigid dynamic object.

In a possible manner, the first CGMV may include a CGMV of a rigid dynamic object and a CGMV of a non-rigid dynamic object.

In a possible manner, the first CGMV may include the CGMV of the rigid dynamic object, and further, the server may send an encoded CGMV of the rigid dynamic object to the terminal device. In this way, a bit rate can be reduced in comparison with encoding of the CGMV of the rigid dynamic object and the CGMV of the non-rigid dynamic object.

In a possible manner, the first CGMV may include the CGMV of the non-rigid dynamic object, and further, the server may send an encoded CGMV of the non-rigid dynamic object to the terminal device. In this way, a bit rate can be reduced in comparison with encoding of the CGMV of the rigid dynamic object and the CGMV of the non-rigid dynamic object. In addition, because a quantity of triangle meshes of the non-rigid dynamic object is large, a calculation amount of the CGMV of the non-rigid dynamic object is large. Therefore, compared with encoding of the CGMV of the rigid dynamic object, encoding of the CGMV of the non-rigid dynamic object can save more computational power of the terminal device.

For example, in the embodiment in FIG. 6a, the bitstream description information may further include a first indication identifier and/or a fourth indication identifier. The first indication identifier may indicate a type and a subtype of a second intermediate rendering result, and the fourth indication identifier may indicate whether the bitstream includes encoded data of the second intermediate rendering result.

For example, the motion vector type may include a subtype A1, a subtype A2, and a subtype A3. A subtype corresponding to a CGMV of a static object is the subtype A1, a subtype corresponding to a CGMV of a rigid dynamic object is the subtype A2, and a subtype corresponding to a CGMV of a non-rigid dynamic object is the subtype A3. In the embodiment in FIG. 6a, the first indication identifier may indicate a type and a subtype of the first CGMV. In this way, the terminal device can learn of a specific type of a to-be-generated second CGMV (the second CGMV is a part of the CGMV other than the first CGMV).

For example, the motion vector type is represented by V, the subtype A1 is represented by 1, the subtype A2 is represented by 2, and the subtype A3 is represented by 3. When the first CGMV is a CGMV of the non-rigid dynamic object, the first indication identifier may be V3.

For example, when the fourth indication identifier is first preset information (for example, 1), it indicates that the bitstream includes the encoded data of the second intermediate rendering result; or when the fourth indication identifier is second preset information (for example, 0), it indicates that the bitstream does not include the encoded data of the second intermediate rendering result.

The following describes a decoding process corresponding to the encoding process in FIG. 6a by using an example in which the bitstream description information of the bitstream includes the first indication identifier and the fourth indication identifier.

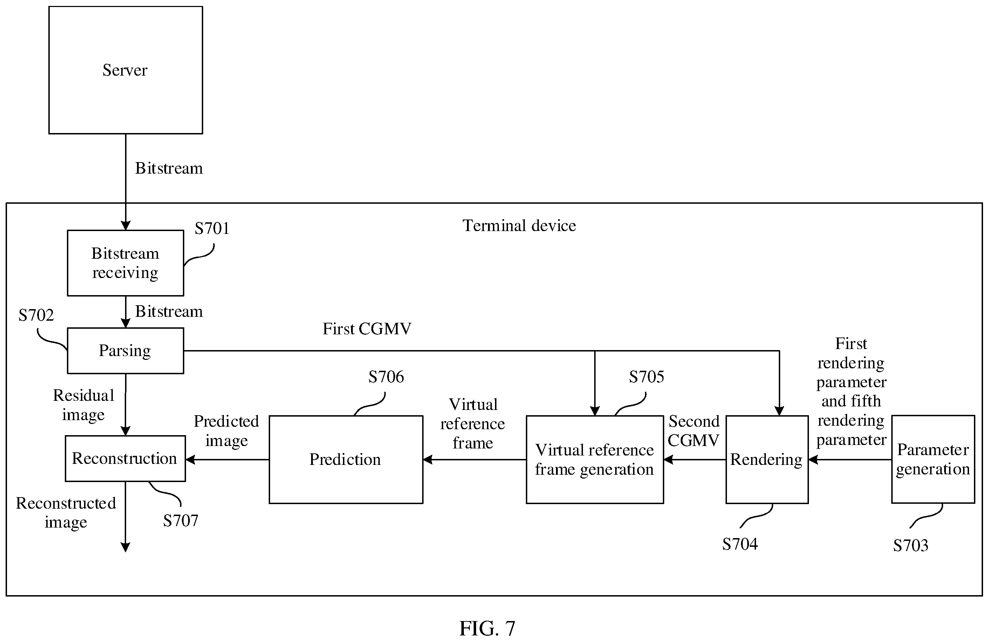

FIG. 7 is a diagram of an example decoding process. FIG. 7 shows a decoding process corresponding to FIG. 6a. In the embodiment in FIG. 7, the terminal device performs rendering processing based on a locally generated rendering parameter, and generates the other part of the CGMV. In the embodiment in FIG. 7, an example in which one frame of image is decoded is used for description.

S701: The terminal device receives the bitstream.

S702: The terminal device parses the bitstream, to obtain a parsing result, where the parsing result includes a residual image corresponding to a current frame and a first CGMV corresponding to the current frame.

For example, for S701 and S702, refer to the descriptions of S501 and S502. Details are not described herein again.

S703: The terminal device generates a first rendering parameter and a fifth rendering parameter.

For example, the first rendering parameter may include a camera parameter, which may include but is not limited to parameters such as a view projection matrix, a camera dynamic range, a focal length, an aperture size, and a depth of field.

For example, the terminal device may load scene geometry information (for example, vertex coordinates of a triangle mesh), material data (for example, a material map and a material generation function), texture data (for example, a texture map), and the like that are prestored in a storage (for example, a hard disk or a memory), to obtain the fifth rendering parameter.

S704: The terminal device performs rendering processing on a three-dimensional scene based on the first rendering parameter and the fifth rendering parameter, and generates a second CGMV based on a first CGMV in a rendering processing process.

For example, the terminal device may input the first rendering parameter and the fifth rendering parameter into a graphics rendering engine (for example, V-Ray, Unreal, or Unity), and the graphics rendering engine performs rendering processing on the three-dimensional scene. In the rendering processing process, the second CGMV is generated based on the first CGMV.

For example, the parsing result may further include the first indication identifier and the fourth indication identifier. When determining, based on the fourth indication identifier, that the bitstream includes the encoded data of the second intermediate rendering result, the terminal device may determine the type and the subtype of the second intermediate rendering result based on the first indication identifier. Next, a third intermediate rendering result of another subtype is generated based on the type and the subtype of the second intermediate rendering result in the rendering processing process. The another subtype is a subtype in subtypes included in the type corresponding to the second intermediate rendering result other than the subtype of the second intermediate rendering result.

For example, in the embodiment in FIG. 7, when the terminal device determines, based on the first indication identifier, that the type of the first CGMV is the motion vector type and the subtype is the subtype A1, that is, the first CGMV sent by the server is a CGMV of the static object, in the rendering processing process, the graphics rendering engine of the terminal device does not need to generate the CGMV of the static object, but only needs to generate the CGMV of the dynamic object (in this case, the another subtype includes the subtype A2 and the subtype A3). That is, the second CGMV is a CGMV of the dynamic object.

For example, in the embodiment in FIG. 7, when the terminal device determines, based on the first indication identifier, that the type of the first CGMV is the motion vector type and the subtype is the subtype A2 and the subtype A3, that is, the first CGMV sent by the server is a CGMV of the rigid dynamic object and a CGMV of the non-rigid dynamic object, in the rendering processing process, the graphics rendering engine of the terminal device does not need to generate the CGMV of the rigid dynamic object and the CGMV of the non-rigid dynamic object, but only needs to generate the CGMV of the static object (in this case, the another subtype includes the subtype A1). That is, the second CGMV is a CGMV of the static object.

For example, in the embodiment in FIG. 7, when the terminal device determines, based on the first indication identifier, that the type of the first CGMV is the motion vector type and the subtype is the subtype A2, that is, the first CGMV sent by the server is a CGMV of the rigid dynamic object, in the rendering processing process, the graphics rendering engine of the terminal device does not need to generate the CGMV of the rigid dynamic object, but only needs to generate the CGMV of the static object and the CGMV of the non-rigid dynamic object (in this case, the another subtype includes the subtype A1 and the subtype A3). That is, the second CGMV is a CGMV of the static object and a CGMV of the non-rigid dynamic object.

For example, in the embodiment in FIG. 7, when the terminal device determines, based on the first indication identifier, that the type of the first CGMV is the motion vector type and the subtype is the subtype A3, that is, the first CGMV sent by the server is a CGMV of the non-rigid dynamic object, in the rendering processing process, the graphics rendering engine of the terminal device does not need to generate the CGMV of the non-rigid dynamic object, but only needs to generate the CGMV of the static object and the CGMV of the rigid dynamic object (in this case, the another subtype includes the subtype A1 and the subtype A2). That is, the second CGMV is a CGMV of the static object and a CGMV of the rigid dynamic object.

It should be understood that, for a process in which the terminal device generates the CGMV of the dynamic object/the CGMV of the static object, refer to the foregoing descriptions. Details are not described herein again.

For example, the parsing result may further include a frame identifier. When the terminal device may determine that the frame identifier is a frame identifier of the virtual reference frame, the terminal device may determine a moment of a model view projection matrix that needs to be used, to generate the second CGMV.

S705: The terminal device generates the virtual reference frame based on the first CGMV and the second CGMV.

For example, the terminal device may combine the first CGMV and the second CGMV, and then generate a virtual reference frame based on a CGMV (namely, a complete CGMV) obtained through combination. For details, refer to the foregoing descriptions. Details are not described herein again.

S706: The terminal device predicts the current frame based on the virtual reference frame, to obtain a predicted image.

S707: The terminal device performs reconstruction based on the predicted image and the residual image, to obtain a reconstructed image of the current frame.

For example, for S706 and S707, refer to the foregoing descriptions. Details are not described herein again.

Because a CGMV generated by the server is more accurate than a CGMV generated by the terminal device, a CGMV used by the terminal device to generate the virtual reference frame can be more accurate, thereby improving precision of the virtual reference frame, and improving image quality of the reconstructed image. In addition, the terminal device needs to generate only a part of the CGMV, so that computational power of the terminal device can be saved, and decoding efficiency can be improved. In addition, in a case of same quality, compared with the conventional technology in which the server sends all CGMVs, the server in this application sends only some CGMVs, so that bit rate overheads of a data stream transmitted by the server to the terminal device can be reduced.

The following describes an encoding process and a decoding process by using an example in which a first intermediate rendering result is an intermediate rendered image and a server sends a part of area images in the intermediate rendered image to a terminal device.

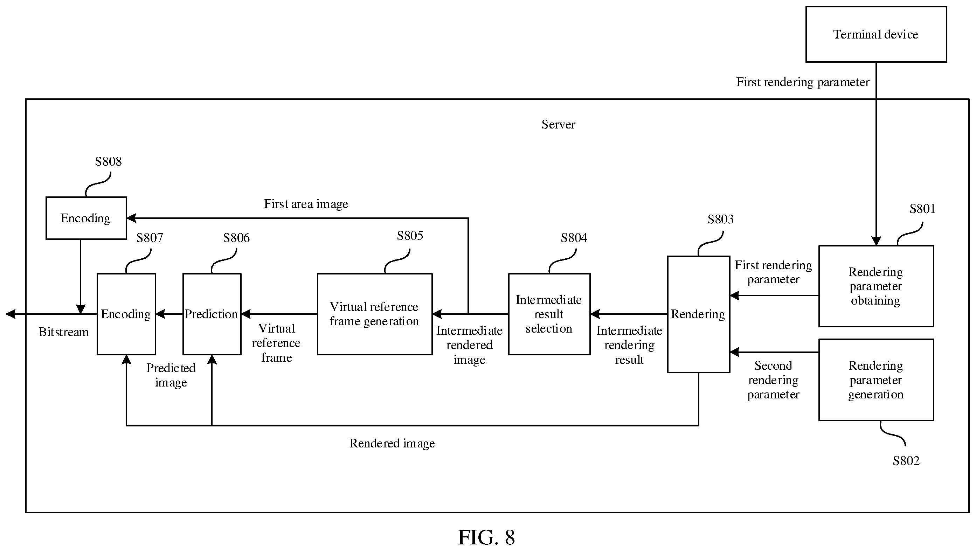

FIG. 8 is a diagram of an example encoding process. In the embodiment in FIG. 8, the server sends a part of area images in the intermediate rendered image to the terminal device, and does not send a second rendering parameter to the terminal device. In the embodiment in FIG. 8, an example in which one frame of rendered image is encoded is used for description.

S801: The server receives a first rendering parameter sent by the terminal device.

S802: The server generates the second rendering parameter.

For example, for S801 and S802, refer to the descriptions of S601 and S602. Details are not described herein again.

S803: The server performs rendering processing on a three-dimensional scene based on the first rendering parameter and the second rendering parameter, to obtain a rendered image.

S804: The server selects the intermediate rendered image based on an intermediate rendering result generated in a rendering processing process.

In a possible manner, the intermediate rendered image may be an image (the rendered image is an image generated by performing all rendering operations by a graphics rendering engine of the server) generated by performing some rendering operations by the graphics rendering engine.

In a possible manner, the intermediate rendered image may be an image generated by performing rendering by the graphics rendering engine of the server based on low-precision or some rendering parameters (the rendered image is an image generated by performing rendering by the graphics rendering engine based on all high-precision rendering parameters).

For example, the intermediate rendered image includes but is not limited to: an intermediate rendered image on which indirect illumination rendering is not performed, an intermediate rendered image on which specular reflection processing is not performed, an intermediate rendered image on which highlight processing is not performed, and the like. This is not limited in this application.

S805: The server uses the intermediate rendered image as a virtual reference frame.

For example, the server may use the intermediate rendered image as the virtual reference frame.

S806: Predict the rendered image based on the virtual reference frame, to obtain a predicted image.

S807: Encode a residual image between the predicted image and the rendered image, and encode encoded data of the residual image into a bitstream.

For example, for S806 and S807, refer to the foregoing descriptions. Details are not described herein again.

S808: The server encodes a first area image in the intermediate rendered image, and encodes encoded data of the first area image into the bitstream.

For example, after generating the complete intermediate rendered image, the server may encode the first area image in the intermediate rendered image.

In a possible manner, the first area image may be images of areas corresponding to four corners in the intermediate rendered image. An image size of an area corresponding to each corner may be set based on a requirement. This is not limited in this application.

In a possible manner, the first area image may be an image of an area other than the areas corresponding to the four corners in the intermediate rendered image.

It should be understood that the first area image may alternatively be an image of another area in the intermediate rendered image. This is not limited in this application.

For example, in the embodiment in FIG. 8, bitstream description information may further include a first indication identifier and/or a fourth indication identifier.

The first indication identifier may indicate a type and a subtype of a second intermediate rendering result, and the fourth indication identifier may indicate whether the bitstream includes encoded data of the second intermediate rendering result.

For example, the image type may include a subtype B1 and a subtype B2. For example, a subtype corresponding to the areas corresponding to the four corners in the intermediate rendered image is the subtype B1, and a subtype corresponding to the area other than the areas corresponding to the four corners in the intermediate rendered image is the subtype B2. In the embodiment in FIG. 8, the first indication identifier may indicate a type and a subtype of the first area image. In this way, the terminal device can learn of a specific type and a specific area of a to-be-generated image, namely, a second area image (the second area image is an image other than the first area image in the intermediate rendered image).

For example, the image type is represented by M, the subtype B1 is represented by 1, and the subtype B2 is represented by 2. Therefore, when the first area image is the images of the areas corresponding to the four corners in the intermediate rendered image, the first indication identifier may be M1.

The following describes a decoding process corresponding to the encoding process in FIG. 8 by using an example in which the bitstream description information of the bitstream includes the first indication identifier and the fourth indication identifier.

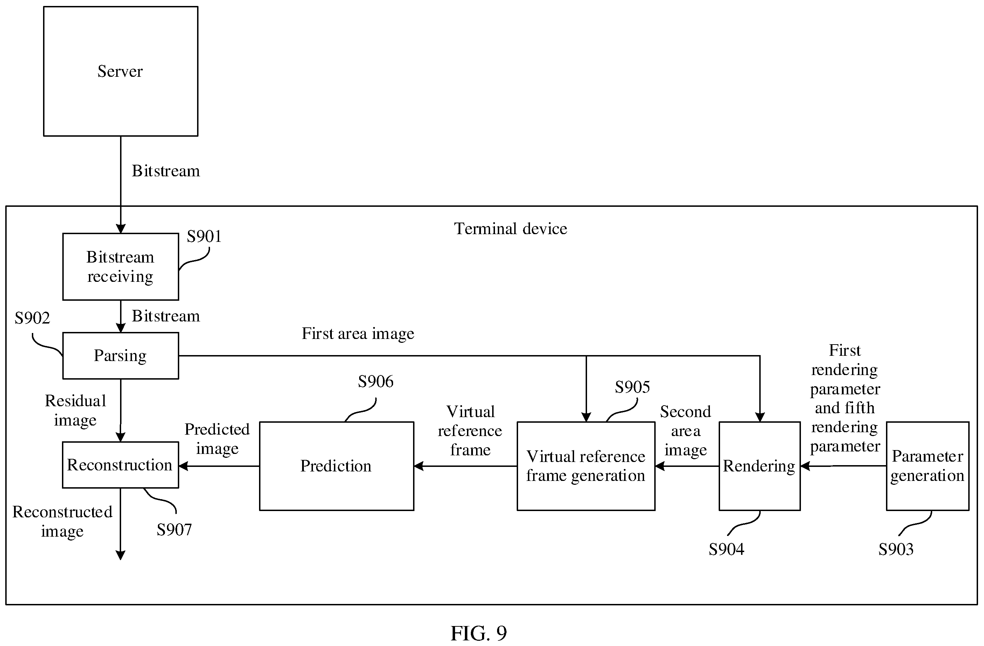

FIG. 9 is a diagram of an example decoding process. FIG. 9 shows a decoding process corresponding to FIG. 8. In the embodiment in FIG. 9, the terminal device performs rendering processing based on a locally generated rendering parameter, and generates a part of area images in the intermediate rendered image. In the embodiment in FIG. 9, an example in which one frame of image is decoded is used for description.

S901: The terminal device receives the bitstream.

S902: The terminal device parses the bitstream, to obtain a parsing result, where the parsing result includes a residual image corresponding to a current frame and a first area image corresponding to the current frame.

For example, for S901 and S902, refer to the descriptions of S501 and S502. Details are not described herein again.

S903: The terminal device generates a first rendering parameter and a fifth rendering parameter.

For example, for S903, refer to the descriptions of S703. Details are not described herein again.

S904: The terminal device performs rendering processing based on the first rendering parameter and the fifth rendering parameter, and generates a second area image based on the first area image in a rendering processing process.

For example, the terminal device may input the first rendering parameter and the fifth rendering parameter into a graphics rendering engine (for example, V-Ray, Unreal, or Unity), and the graphics rendering engine performs rendering processing on the three-dimensional scene. In the rendering processing process, the second area image is generated based on the first area image.

For example, the parsing result may further include the first indication identifier and the fourth indication identifier. When determining, based on the fourth indication identifier, that the bitstream includes the encoded data of the second intermediate rendering result, the terminal device may determine the type and the subtype of the second intermediate rendering result based on the first indication identifier. Next, a third intermediate rendering result of another subtype is generated based on the type and the subtype of the second intermediate rendering result in the rendering processing process. The another subtype is a subtype in subtypes included in the type corresponding to the second intermediate rendering result other than the subtype of the second intermediate rendering result.

For example, in the embodiment in FIG. 9, when the terminal device determines, based on the first indication identifier, that the type of the first area image is the image type and the subtype is the subtype B1, that is, the first area image sent by the server is the images of the areas corresponding to the four corners in the intermediate rendered image, in the rendering processing process, the graphics rendering engine of the terminal device does not need to generate the images of the areas corresponding to the four corners, but only needs to generate the image of the area other than the areas corresponding to the four corners (in this case, the another subtype is the subtype B2). That is, the second area image is the image of the area other than the areas corresponding to the four corners.

For example, in the embodiment in FIG. 9, when the terminal device determines, based on the first indication identifier, that the type of the first area image is the image type and the subtype is the subtype B2, that is, the first area image sent by the server is the image of the area other than the areas corresponding to the four corners in the intermediate rendered image, in the rendering processing process, the graphics rendering engine of the terminal device does not need to generate the image of the area other than the areas corresponding to the four corners, but only needs to generate the images of the areas of the four corners (in this case, the another subtype is the subtype B1). That is, the second area image is the images of the areas corresponding to the four corners.

S905: The terminal device uses, as a virtual reference frame, an intermediate rendered image obtained by combining the first area image and the second area image.

For example, the first area image and the second area image may be combined based on pixels, to obtain an intermediate rendered image; and then, the intermediate rendered image obtained through combination is used as the virtual reference frame.

S906: The terminal device predicts the current frame based on the virtual reference frame, to obtain a predicted image.

S907: The terminal device performs reconstruction based on the predicted image and the residual image, to obtain a reconstructed image of the current frame.

For example, for S906 and S907, refer to the foregoing descriptions. Details are not described herein again.

Because the intermediate rendered image generated by the server is more accurate than the intermediate rendered image generated by the terminal device, the intermediate rendered image used by the terminal device to generate the virtual reference frame can be more accurate, thereby improving precision of the virtual reference frame and improving image quality of the reconstructed image. In addition, the terminal device only needs to generate a part of area images in the intermediate rendered image, so that computational power of the terminal device can be saved, and decoding efficiency can be improved. In addition, in a case of same quality, compared with the conventional technology in which the server sends all CGMVs, the server in this application sends only a part of area images in the intermediate rendered image, so that bit rate overheads of a data stream transmitted by the server to the terminal device can be reduced. In addition, because a difference between the intermediate rendered image and the rendered image is small, a small residual can be obtained, and further, a bit rate of encoded data of the residual block can be reduced.

It should be noted that when a bitstream description parameter of the bitstream does not include the fourth indication identifier, the terminal device in the embodiments in FIG. 7 and

FIG. 9 may determine, based on pre-agreed information, whether the bitstream includes the encoded data of the second intermediate rendering result. When the bitstream description parameter of the bitstream does not include the first indication identifier, the terminal device in the embodiments in FIG. 7 and FIG. 9 may determine the type and the subtype of the second intermediate rendering result in the parsing result based on the pre-agreed information.

It should be understood that when the first intermediate rendering result is other information, encoding and decoding may also be performed with reference to the foregoing manner, and whether to send all/some of the other information to the terminal device may be determined based on a data amount of the other information. This is not limited in this application.

For example, when the first intermediate rendering result of the server includes a CGMV and an intermediate rendered image, in a process of encoding the rendered image, a virtual reference frame generated based on the CGMV and a virtual reference frame generated based on the intermediate rendered image may be used as candidate reference frames; a plurality of predicted blocks matching the to-be-encoded block in the rendered image may be determined based on the candidate reference frames; and an optimal predicted block is selected, and a residual between the optimal predicted block and the to-be-encoded block is calculated, to determine a residual block. In this case, a frame identifier used to determine a virtual reference frame corresponding to an optimal residual block may be encoded into the bitstream; and a value of the first indication identifier may be set to an identifier that is of a type of the first intermediate rendering result and that is used to determine the virtual reference frame corresponding to the optimal residual block.

It should be understood that, when the first intermediate rendering result further includes other information, if a virtual reference frame generated based on the other information, a virtual reference frame generated based on the CGMV, and a virtual reference frame generated based on the intermediate rendered image are all used as candidate reference frames, the optimal residual block may be selected in the foregoing manner for encoding, a corresponding frame identifier is encoded into the bitstream, and a value of the first indication identifier is set. This is not limited in this application.

For example, when the first rendering parameter generated by the terminal device is a part of parameters required for rendering processing by the graphics rendering engine, the server may generate the second rendering parameter. Because a rendering parameter generated by the server is more accurate than a rendering parameter generated by the terminal device, the server may send a part or all of the second rendering parameter to the terminal device. In this way, a first intermediate rendering result generated by the terminal device can be more accurate, precision of the virtual reference frame can be improved, and image quality of an image obtained through decoding based on the virtual reference frame can be improved.

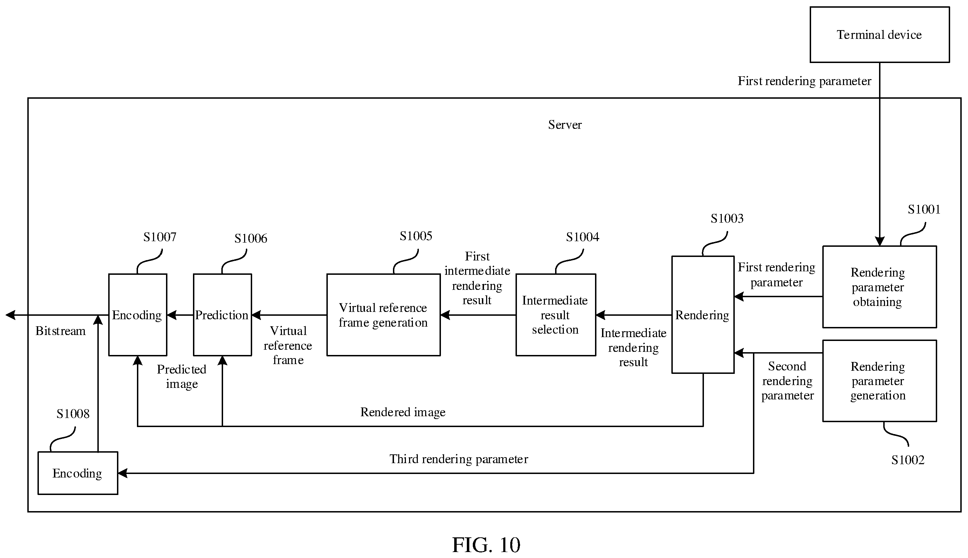

FIG. 10 is a diagram of an example encoding process. In the embodiment in FIG. 10, a server does not send a first intermediate rendering result to a terminal device, but sends a third rendering parameter (a part or all of a second rendering parameter) to the terminal device. In the embodiment in FIG. 10, an example in which one frame of rendered image is encoded is used for description.

S1001: The server receives a first rendering parameter sent by the terminal device.

For example, the first rendering parameter may include a camera parameter. For example, the camera parameter may include but is not limited to parameters such as a view projection matrix, a camera dynamic range, a focal length, an aperture size, and a depth of field.

S1002: The server generates the second rendering parameter.

For example, the server may load scene geometry information (for example, vertex coordinates of a triangle mesh), material data (for example, a material map and a material generation function), texture data (for example, a texture map), motion information of a dynamic object, and the like that are prestored in a storage (for example, a hard disk or a memory), to obtain the second rendering parameter.

For example, the motion information of the dynamic object may include motion information (for example, a motion track) of a rigid dynamic object and/or motion information (for example, a motion track) of a non-rigid dynamic object.

S1003: The server performs rendering processing on a three-dimensional scene based on the first rendering parameter and the second rendering parameter, to obtain a rendered image.

S1004: The server selects a first intermediate rendering result based on an intermediate rendering result generated in a rendering processing process.

For example, in the embodiment in FIG. 10, the first intermediate rendering result may be a CGMV, or may be an intermediate rendered image.

S1005: The server generates a virtual reference frame based on the first intermediate rendering result.

S1006: The server predicts the rendered image based on the virtual reference frame, to obtain a predicted image.

S1007: The server encodes a residual image between the predicted image and the rendered image, and encodes encoded data of the residual image into a bitstream.

For example, for S 1005 to S 1007, refer to the descriptions in the foregoing embodiments. Details are not described herein again.

S1008: The server encodes the third rendering parameter into the bitstream.

For example, the third rendering parameter may be a part of parameters in the second rendering parameter, or may be all parameters in the second rendering parameter. This is not limited in this application. Compared with encoding all of the second rendering parameter into the bitstream, encoding a part of the second rendering parameter into the bitstream can further reduce bit rate overheads of a data stream transmitted by the server to the terminal device.

For example, because a data amount of the third rendering parameter is small, the server may encode the third rendering parameter, encode encoded data of the third rendering parameter into the bitstream, and send the bitstream to the server; or the server may not encode the third rendering parameter, but directly encode the third rendering parameter into the bitstream. This is not limited in this application.

In a possible manner, the third rendering parameter may include motion information of a rigid motion object and motion information of a non-rigid dynamic object. In other words, the motion information of the rigid motion object and the motion information of the non-rigid dynamic object are encoded into the bitstream.

In a possible manner, the third rendering parameter may include motion information of a rigid motion object. In other words, the motion information of the rigid motion object is encoded into the bitstream. In this way, compared with encoding the motion information of the rigid motion object and the motion information of the non-rigid dynamic object into the bitstream, encoding the motion information of the rigid motion object into the bitstream can further reduce bit rate overheads of the data stream transmitted by the server to the terminal device. In a possible manner, the third rendering parameter may include motion information of a non-rigid motion object. In other words, the motion information of the non-rigid dynamic object is encoded into the bitstream. In this way, compared with encoding the motion information of the rigid motion object and the motion information of the non-rigid dynamic object into the bitstream, encoding the motion information of the non-rigid dynamic object into the bitstream can further reduce bit rate overheads of the data stream transmitted by the server to the terminal device.

In this way, the data amount of the third rendering parameter is far less than a data amount of the second intermediate rendering result. Compared with transmitting the second intermediate rendering result, transmitting the third rendering parameter can further reduce a bit rate.

For example, in the embodiment in FIG. 10, bitstream description information may include at least one of the following: a first indication identifier, a second indication identifier, a third indication identifier, or a fourth indication identifier. The first indication identifier indicates whether the bitstream includes encoded data of the first intermediate rendering result, the second indication identifier may indicate a type of the first intermediate rendering result, the third indication identifier may indicate whether the bitstream includes the third rendering parameter, and the fourth indication identifier may indicate a type of the third rendering parameter.

For example, in the embodiment in FIG. 10, the first indication identifier may be second preset information, indicating that the bitstream does not include the encoded data of the first intermediate rendering result. It should be understood that the first indication identifier in FIG. 10 and the fourth indication identifier in the embodiment in FIG. 6 may be a same indication identifier. When the fourth indication identifier is second preset information, it may be determined that the bitstream does not include the encoded data of the first intermediate rendering result.

For example, the first intermediate rendering result corresponds to one or more types. When the first intermediate rendering result corresponds to one type, the type of the first intermediate rendering result may be used as a value of the second indication identifier, and is encoded into the bitstream. When the first intermediate rendering result corresponds to a plurality of types, a type that is of the first intermediate rendering result and that is used to generate the virtual reference frame of the optimal predicted block may be used as a value of the second indication identifier, and is encoded into the bitstream.

For example, when the third indication identifier is first preset information (for example, 1), it indicates that the bitstream includes the third rendering parameter; or when the third indication identifier is second preset information (for example, 0), it indicates that the bitstream does not include the third rendering parameter.

For example, a parameter included in the second rendering parameter may correspond to a plurality of types. For example, a type corresponding to the motion information of the rigid dynamic object is a type C1, and a type corresponding to the motion information of the non-rigid dynamic object is a type C2. The type of the third rendering parameter encoded into the bitstream may be used as a value of the fourth indication identifier, and is encoded into the bitstream.

The following describes a decoding process corresponding to the encoding process in FIG. 10 by using an example in which the bitstream description information of the bitstream includes the first indication identifier, the second indication identifier, the third indication identifier, and the fourth indication identifier.

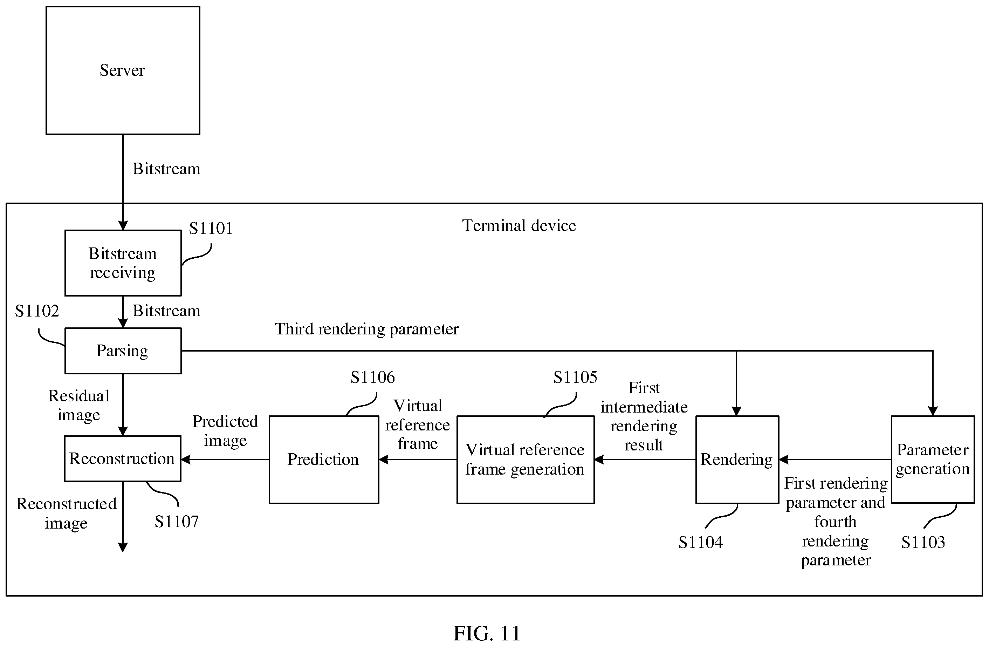

FIG. 11 is a diagram of an example decoding process. FIG. 11 shows a decoding process corresponding to FIG. 10. In the embodiment in FIG. 11, the terminal device performs rendering processing based on a locally generated first rendering parameter and the second rendering parameter received from the server, and generates a first intermediate rendering result. The third rendering parameter includes a part of the second rendering parameter. In the embodiment in FIG. 11, an example in which one frame of image is decoded is used for description.

S1101: The terminal device receives the bitstream.

S1102: The terminal device parses the bitstream, to obtain a parsing result, where the parsing result includes a residual image corresponding to a current frame and a third rendering parameter corresponding to the current frame.

S1103: The terminal device generates the first rendering parameter and a fourth rendering parameter.

For example, the first rendering parameter includes a camera parameter. For example, the camera parameter may include but is not limited to parameters such as a view projection matrix, a camera dynamic range, a focal length, an aperture size, and a depth of field.

For example, the terminal device may obtain the third indication identifier from the bitstream through parsing. When determining, based on the third indication identifier, that the bitstream includes the third rendering parameter, the terminal device may determine the type of the third rendering parameter based on the fourth indication identifier; and then, generate the fourth rendering parameter based on the type of the third rendering parameter.

For example, when the server encodes the part of the second rendering parameter into the bitstream, that is, when the third rendering parameter includes a part of parameters in the second rendering parameter, the fourth indication identifier includes a type of the part of the second rendering parameter. In this case, the terminal device may generate the fourth rendering parameter based on the type of the third rendering parameter. The fourth rendering parameter is a parameter other than the third rendering parameter in the second rendering parameter.

For example, if the type of the third rendering parameter is the type C1, that is, the third rendering parameter is the motion information of the rigid dynamic object, the fourth rendering parameter generated by the terminal device may include, for example, scene geometry information (for example, vertex coordinates of a triangle mesh), material data (for example, a material map and a material generation function), texture data (for example, a texture map), and the motion information of the non-rigid dynamic object.

For example, if the type of the third rendering parameter is the type C2, that is, the third rendering parameter is the motion information of the non-rigid dynamic object, the fourth rendering parameter generated by the terminal device may include, for example, scene geometry information (for example, vertex coordinates of a triangle mesh), material data (for example, a material map and a material generation function), texture data (for example, a texture map), and the motion information of the rigid dynamic object.

For example, if the type of the third rendering parameter includes the type C1 and the type C2, that is, the third rendering parameter includes the motion information of the rigid dynamic object and the motion information of the non-rigid dynamic object, the fourth rendering parameter generated by the terminal device may include, for example, scene geometry information (for example, vertex coordinates of a triangle mesh), material data (for example, a material map and a material generation function), and texture data (for example, a texture map).

S1104: The terminal device performs rendering processing on the three-dimensional scene based on the first rendering parameter, the third rendering parameter, and the fourth rendering parameter, and generates the first intermediate rendering result in a rendering processing process.

For example, when the third rendering parameter includes a part of parameters in the second rendering parameter, rendering processing is performed on the three-dimensional scene based on the first rendering parameter, the third rendering parameter, and the fourth rendering parameter.

It should be understood that when the server encodes all of the second rendering parameter into the bitstream, that is, when the third rendering parameter includes all parameters in the second rendering parameter, the fourth indication identifier includes a type of all of the second rendering parameter, and the terminal device may obtain all of the second rendering parameter through decoding. In this case, the terminal device does not need to generate the fourth rendering parameter, and then performs rendering processing on the three-dimensional scene based on the first rendering parameter and the third rendering parameter.

For example, the first intermediate rendering result may be a CGMV or an intermediate rendered image.

For example, when determining, based on the first indication identifier obtained from the bitstream through parsing, that the bitstream does not include the encoded data of the first intermediate rendering result, in the rendering processing process, the terminal device may generate the first intermediate rendering result of the corresponding type based on the second indication identifier obtained through parsing.

S1105: Generate a virtual reference frame based on the first intermediate rendering result.

S1106: Predict the current frame based on the virtual reference frame, to obtain a predicted image.

S1107: Perform reconstruction based on the predicted image and the residual image, to obtain a reconstructed image of the current frame.

For example, for S1106 and S1107, refer to the foregoing descriptions. Details are not described herein again.

It should be noted that when the bitstream description parameter of the bitstream does not include the first indication identifier, the terminal device in the embodiment in FIG. 11 may determine, based on pre-agreed information, whether the bitstream includes the encoded data of the first intermediate rendering result. When the bitstream description parameter of the bitstream does not include the second indication identifier, the terminal device in the embodiment in FIG. 11 may determine the type of the first intermediate rendering result based on pre-agreed information. When the bitstream description parameter of the bitstream does not include the third indication identifier, the terminal device in the embodiment in FIG. 11 may determine, based on pre-agreed information, whether the bitstream includes the third rendering parameter. When the bitstream description parameter of the bitstream does not include the fourth indication identifier, the terminal device in the embodiment in FIG. 11 may determine the type of the third rendering parameter in the parsing result based on pre-agreed information.

For example, a data amount of the second rendering parameter is small (several/dozens of KB). Therefore, even if the server further sends all or a part of the second rendering parameter to the terminal device in addition to the second intermediate rendering result, the bit rate overheads of the data stream transmitted by the server to the terminal device are also less than bit rate overheads of a data stream transmitted by a server to a terminal device in the conventional technology, and computational power of the terminal device can be further saved.

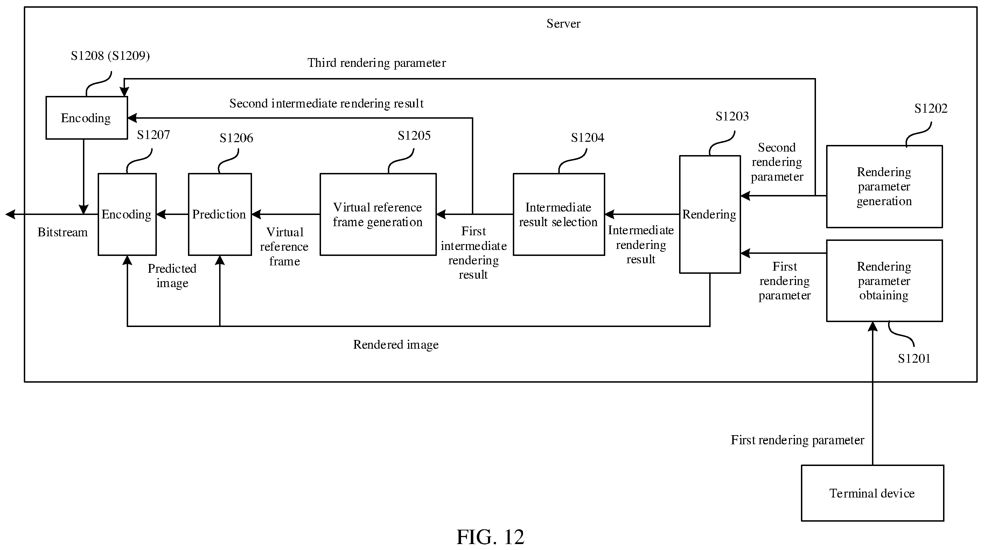

FIG. 12 is a diagram of an example encoding process. In the embodiment in FIG. 12, a server sends a second intermediate rendering result and a third rendering parameter to a terminal device. In the embodiment in FIG. 12, an example in which one frame of rendered image is encoded is used for description.

S1201: The server receives a first rendering parameter sent by the terminal device.

For example, the first rendering parameter may include a camera parameter and motion information of a non-rigid dynamic object (for example, a skeletal node of a moving role). For example, the camera parameter may include but is not limited to parameters such as a view projection matrix, a camera dynamic range, a focal length, an aperture size, and a depth of field.

S 1202: The server generates the second rendering parameter.

For example, the server may load scene geometry information (for example, vertex coordinates of a triangle mesh), material data (for example, a material map and a material generation function), texture data (for example, a texture map), motion information of a dynamic object, and the like that are prestored in a storage (for example, a hard disk or a memory), to obtain the second rendering parameter.

For example, the motion information of the dynamic object may include motion information (for example, a motion track) of a rigid dynamic object and/or motion information (for example, a motion track) of a non-rigid dynamic object (namely, a non-rigid dynamic object other than the moving role).

S1203: The server performs rendering processing on a three-dimensional scene based on the first rendering parameter and the second rendering parameter, to obtain a rendered image.

S1204: The server selects a first intermediate rendering result based on an intermediate rendering result generated in a rendering processing process.

For example, in the embodiment in FIG. 12, the first intermediate rendering result may be a CGMV, or may be an intermediate rendered image.

S1205: The server generates a virtual reference frame based on the first intermediate rendering result.

S1206: The server predicts the rendered image based on the virtual reference frame, to obtain a predicted image.

S1207: The server encodes a residual image between the predicted image and the rendered image, and encodes encoded data of the residual image into a bitstream.

S1208: The server encodes the second intermediate rendering result, and encodes encoded data of the second intermediate rendering result into the bitstream, where the second intermediate rendering result is a part of the first intermediate rendering result.

S1209: The server encodes the third rendering parameter into the bitstream.

For example, for S1205 to S1209, refer to the descriptions in the foregoing embodiments. Details are not described herein again.

For example, in the embodiment in FIG. 12, bitstream description information may include at least one of the following: a first indication identifier, a second indication identifier, a third indication identifier, and a fourth indication identifier. The first indication identifier may indicate a type and a subtype of the second intermediate rendering result; the second indication identifier indicates whether the bitstream includes the third rendering parameter; the third indication identifier indicates a type of the third rendering parameter; and the fourth indication identifier may indicate whether the bitstream includes the encoded data of the second intermediate rendering result.

The following describes a decoding process corresponding to the encoding process in FIG. 12 by using an example in which the bitstream description information of the bitstream includes the first indication identifier, the second indication identifier, the third indication identifier, and the fourth indication identifier.

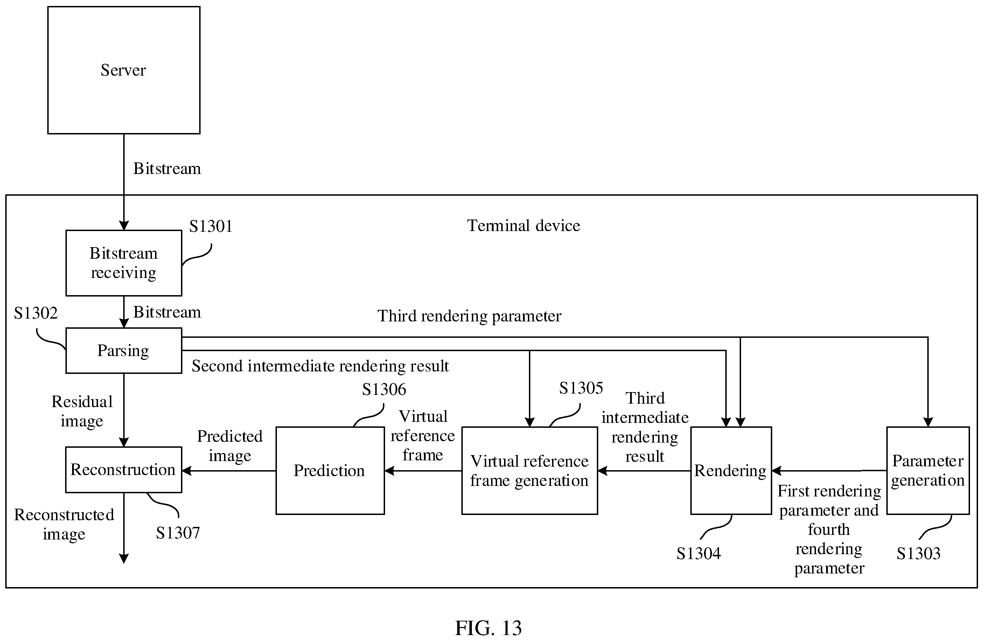

FIG. 13 is a diagram of an example decoding process. FIG. 13 shows a decoding process corresponding to FIG. 12. In the embodiment in FIG. 13, the terminal device performs rendering processing based on a locally generated first rendering parameter and the third rendering parameter received from the server, and generates a third intermediate rendering result. The third rendering parameter includes a part of the second rendering parameter. In the embodiment in FIG. 13, an example in which one frame of image is decoded is used for description.

S1301: The terminal device receives the bitstream.

S1302: The terminal device parses the bitstream, to obtain a parsing result, where the parsing result includes a residual image corresponding to a current frame, a second intermediate rendering result corresponding to the current frame, and a third rendering parameter corresponding to the current frame.

S1303: The terminal device generates the first rendering parameter and a fourth rendering parameter.

For example, the first rendering parameter includes the camera parameter and the motion information of the non-rigid dynamic object (for example, the skeletal node of the moving role). For example, the camera parameter may include but is not limited to parameters such as a view projection matrix, a camera dynamic range, a focal length, an aperture size, and a depth of field.

S1304: The terminal device performs rendering processing on the three-dimensional scene based on the first rendering parameter, the third rendering parameter,

and the fourth rendering parameter, and generates the third intermediate rendering result based on the second intermediate rendering result in a rendering processing process.

S 1305: The terminal device generates a virtual reference frame based on the second intermediate rendering result and the third intermediate rendering result.

S1306: The terminal device predicts the current frame based on the virtual reference frame, to obtain a predicted image.

S1307: The terminal device performs reconstruction based on the predicted image and the residual image, to obtain a reconstructed image of the current frame.

For example, for S1304 and S1307, refer to the foregoing descriptions. Details are not described herein again.

It should be noted that when a bitstream description parameter of the bitstream does not include the fourth indication identifier, the terminal device in the embodiments in FIG. 13 may determine, based on pre-agreed information, whether the bitstream includes the encoded data of the second intermediate rendering result. When the bitstream description parameter of the bitstream does not include the first indication identifier, the terminal device in the embodiment in FIG. 13 may determine the type and the subtype of the second intermediate rendering result based on pre-agreed information. When the bitstream description parameter of the bitstream does not include the second indication identifier, the terminal device in the embodiment in FIG. 13 may determine, based on pre-agreed information, whether the bitstream includes the third rendering parameter. When the bitstream description parameter of the bitstream does not include the third indication identifier, the terminal device in the embodiment in FIG. 13 may determine the type of the third rendering parameter in the parsing result based on pre-agreed information.

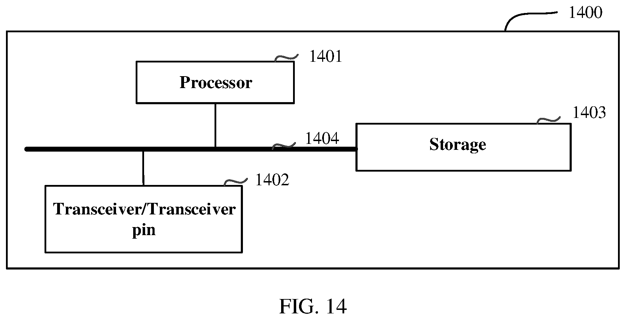

In an example, FIG. 14 is a schematic block diagram of an apparatus 1400 according to an embodiment of this application. The apparatus 1400 may include a processor 1401 and a transceiver/transceiver pin 1402, and optionally further includes a storage 1403.

Components of the apparatus 1400 are coupled together through a bus 1404. In addition to a data bus, the bus 1404 further includes a power bus, a control bus, and a status signal bus. However, for clear description, various types of buses in the figure are referred to as the bus 1404.

Optionally, the storage 1403 may be configured to store instructions in the foregoing method embodiments. The processor 1401 may be configured to: execute the instructions in the storage 1403, control a receiving pin to receive a signal, and control a sending pin to send a signal.

The apparatus 1400 may be the electronic device or a chip of the electronic device in the foregoing method embodiments.

All related content of the steps in the foregoing method embodiments may be cited in function descriptions of the corresponding functional modules. Details are not described herein again.

An embodiment further provides a computer-readable storage medium. The computer-readable storage medium stores computer instructions. When the computer instructions are run on an electronic device, the electronic device is enabled to perform the foregoing related method steps, to implement the encoding and decoding method in the foregoing embodiments.

An embodiment further provides a computer program product. When the computer program product is run on a computer, the computer is enabled to perform the foregoing related steps, to implement the encoding and decoding method in the foregoing embodiments.

In addition, an embodiment of this application further provides an apparatus. The apparatus may be specifically a chip, a component, or a module, and the apparatus may include a processor and a storage that are connected. The storage is configured to store computer-executable instructions. When the apparatus runs, the processor may execute the computer-executable instructions stored in the storage, so that the chip performs the encoding and decoding method in the foregoing method embodiments.

The electronic device, the computer-readable storage medium, the computer program product, or the chip provided in embodiments is configured to perform the corresponding method provided above. Therefore, for beneficial effects that can be achieved, refer to the beneficial effects in the corresponding method provided above. Details are not described herein.

Based on the descriptions about the foregoing implementations, a person skilled in the art may understand that, for a purpose of convenient and brief description, division into the foregoing functional modules is used as an example for illustration. In actual application, the foregoing functions may be allocated to different functional modules and implemented based on requirements. In other words, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

Any content in embodiments of this application and any content in a same embodiment can be freely combined. Any combination of the foregoing content falls within the scope of this application.

When the integrated unit is implemented in the form of a software functional unit and sold or used as an independent product, the integrated unit may be stored in a readable storage medium. Based on such an understanding, the technical solutions of embodiments of this application essentially, or the part contributing to the conventional technology, or all or some of the technical solutions may be implemented in a form of a software product. The software product is stored in a storage medium and includes several instructions for instructing a device (which may be a single-chip microcomputer, a chip, or the like) or a processor (processor) to perform all or some of the steps of the methods described in embodiments of this application. The foregoing storage medium includes various media that can store program code, such as a USB flash drive, a removable hard disk drive, a read-only memory (read-only memory, ROM), a random access memory (random access memory, RAM), a magnetic disk, or an optical disc.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

Methods or algorithm steps described in combination with the content disclosed in this embodiment of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium and encode information into the storage medium. Certainly, the storage medium may be a component of the processor. The processor and the storage medium may be disposed in an ASIC.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium. The communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples instead of limitations. Inspired by this application, a person of ordinary skill in the art may further make modifications without departing from the purposes of this application and the protection scope of the claims, and all the modifications shall fall within the protection of this application.

**Claims**

1. A device-cloud collaboration system, wherein the device-cloud collaboration system comprises a server and a terminal device, the server comprises a first rendering module, an encoder, and a first communication module, and the terminal device comprises a second communication module, a second rendering module, and a decoder;

   the first rendering module is configured to: perform rendering processing on a three-dimensional scene based on a rendering parameter, to obtain a rendered image, wherein the rendering parameter comprises a first rendering parameter obtained from the terminal device; select a first intermediate rendering result based on an intermediate rendering result generated in the rendering processing process; and generate a virtual reference frame based on the first intermediate rendering result;
the encoder is configured to: predict the rendered image based on the virtual reference frame, to obtain a predicted image; and encode a residual image between the predicted image and the rendered image, and encode encoded data of the residual image into a bitstream, wherein the bitstream does not comprise encoded data of the first intermediate rendering result;
the first communication module is configured to send the bitstream;
the second communication module is configured to receive the bitstream;
the decoder is configured to parse the bitstream, to obtain a parsing result, wherein the parsing result comprises a residual image corresponding to a current frame;
the second rendering module is configured to: perform rendering processing on the three-dimensional scene based on a rendering parameter corresponding to the current frame, and generate a first intermediate rendering result in the rendering processing process, wherein the rendering parameter corresponding to the current frame comprises a first rendering parameter generated by the terminal device; and generate a virtual reference frame based on the first intermediate rendering result generated by the second rendering module; and
the decoder is further configured to: predict the current frame based on the virtual reference frame generated by the second rendering module, to obtain a predicted image; and perform reconstruction based on the predicted image determined by the decoder and the residual image corresponding to the current frame, to obtain a reconstructed image of the current frame.

2. An encoding method, applied to a server, wherein the method comprises:

   performing rendering processing on a three-dimensional scene based on a rendering parameter, to obtain a rendered image, wherein the rendering parameter comprises a first rendering parameter obtained from a terminal device;
   selecting a first intermediate rendering result based on an intermediate rendering result generated in the rendering processing process;
   generating a virtual reference frame based on the first intermediate rendering result;
   predicting the rendered image based on the virtual reference frame, to obtain a predicted image; and
   encoding a residual image between the predicted image and the rendered image, and encoding encoded data of the residual image into a bitstream, wherein the bitstream does not comprise encoded data of the first intermediate rendering result.

3. The method according to claim 2, wherein the bitstream further comprises a first indication identifier and/or a second indication identifier;

the first indication identifier indicates whether the bitstream comprises the encoded data of the first intermediate rendering result; and the second indication identifier indicates a type of the first intermediate rendering result.

4. The method according to claim 2 or 3, wherein the rendering parameter further comprises a second rendering parameter generated by the server, and the method further comprises:
encoding a third rendering parameter into the bitstream, wherein the third rendering parameter comprises all or a part of parameters in the second rendering parameter.

5. The method according to any one of claims 2 to 4, wherein the rendering parameter further comprises the second rendering parameter generated by the server, and the bitstream further comprises a third indication identifier and/or a fourth indication identifier;

the third indication identifier indicates whether the bitstream comprises the third rendering parameter, and the third rendering parameter comprises all or a part of parameters in the second rendering parameter; and the fourth indication identifier indicates a type of the third rendering parameter.

6. The method according to any one of claims 2 to 5, wherein generating the virtual reference frame based on the first intermediate rendering result comprises:

determining the type of the first intermediate rendering result; and generating the virtual reference frame based on the first intermediate rendering result and the type of the first intermediate rendering result.

7. The method according to claim 6, wherein generating the virtual reference frame based on the first intermediate rendering result and the type of the first intermediate rendering result comprises:

generating the virtual reference frame based on the first intermediate rendering result and a reconstructed image when the type of the first intermediate rendering result is a motion vector type, wherein the first intermediate rendering result is a computer graphics motion vector CGMV, and the CGMV is used to describe a displacement relationship between a sample in the rendered image and a sample in the reconstructed image.

8. The method according to claim 6, wherein generating the virtual reference frame based on the first intermediate rendering result and the type of the first intermediate rendering result comprises:

determining the intermediate rendering result as the virtual reference frame when it is determined that the type of the first intermediate rendering result is an image type, wherein the first intermediate rendering result is an intermediate rendered image, and calculation complexity corresponding to the intermediate rendered image is lower than calculation complexity corresponding to the rendered image.

9. The method according to any one of claims 2 to 8, wherein
the first intermediate rendering result comprises a CGMV and/or an intermediate rendered image, and calculation complexity corresponding to the intermediate rendered image is lower than calculation complexity corresponding to the rendered image.

10. A decoding method, applied to a terminal device, wherein the method comprises:

receiving a bitstream; parsing the bitstream, to obtain a parsing result, wherein the parsing result comprises a residual image corresponding to a current frame; performing rendering processing on a three-dimensional scene based on a rendering parameter corresponding to the current frame, and generating a first intermediate rendering result in the rendering processing process, wherein the rendering parameter comprises a first rendering parameter generated by the terminal device; generating a virtual reference frame based on the first intermediate rendering result; predicting the current frame based on the virtual reference frame, to obtain a predicted image; and performing reconstruction based on the predicted image and the residual image, to obtain a reconstructed image of the current frame.

11. The method according to claim 10, wherein

the parsing result further comprises a first indication identifier and a second indication identifier, the first indication identifier indicates whether the bitstream comprises encoded data of a first intermediate rendering result generated by a server, and the second indication identifier indicates a type of the first intermediate rendering result generated by the server; and generating the first intermediate rendering result in the rendering processing process comprises: generating the first intermediate rendering result in the rendering processing process based on the second indication identifier when it is determined, based on the first indication identifier, that the bitstream does not comprise the encoded data of the first intermediate rendering result generated by the server.

12. The method according to claim 10 or 11, wherein

the parsing result further comprises a third indication identifier and a fourth indication identifier, the third indication identifier indicates whether the bitstream comprises a third rendering parameter, and the fourth indication identifier indicates a type of the third rendering parameter; and
the method further comprises:

determining the type of the third rendering parameter based on the fourth indication identifier when it is determined, based on the third indication identifier, that the bitstream comprises the third rendering parameter; and
generating a fourth rendering parameter of another type based on the type of the third rendering parameter, wherein the another type is a type other than the type of the third rendering parameter in a plurality of types corresponding to a second rendering parameter generated by the server, wherein the rendering parameter further comprises the third rendering parameter and the fourth rendering parameter.

13. The method according to claim 12, wherein the method further comprises:

when it is determined, based on the third indication identifier, that the bitstream does not comprise the third rendering parameter, generating, by the terminal device, a second rendering parameter corresponding to the current frame, wherein
the rendering parameter further comprises a second rendering parameter generated by the terminal device.

14. The method according to any one of claims 10 to 13, wherein generating the virtual reference frame based on the first intermediate rendering result comprises:

determining the type of the first intermediate rendering result; and
generating the virtual reference frame based on the first intermediate rendering result and the type of the first intermediate rendering result.

15. The method according to claim 14, wherein generating the virtual reference frame based on the first intermediate rendering result and type information of the first intermediate rendering result comprises:

generating the virtual reference frame based on the first intermediate rendering result and a reconstructed image of another frame when the type of the first intermediate rendering result is a motion vector type, wherein
the first intermediate rendering result is a computer graphics motion vector CGMV, and the CGMV is used to describe a displacement relationship between a sample in the reconstructed image of the current frame and a sample in the reconstructed image of the another frame.

16. The method according to claim 14, wherein generating the virtual reference frame based on the first intermediate rendering result and type information of the first intermediate rendering result comprises:

determining the first intermediate rendering result as the virtual reference frame when it is determined that the type of the first intermediate rendering result is an image type, wherein
the first intermediate rendering result is an intermediate rendered image, and calculation complexity corresponding to the intermediate rendered image is lower than calculation complexity corresponding to the rendered image.

17. The method according to any one of claims 10 to 16, wherein the first intermediate rendering result comprises a CGMV and/or an intermediate rendered image, and calculation complexity corresponding to the intermediate rendered image is lower than calculation complexity corresponding to the rendered image.

18. A device-cloud collaboration system, wherein the device-cloud collaboration system comprises a server and a terminal device, the server comprises a first rendering module, an encoder, and a first communication module, and the terminal device comprises a second communication module, a second rendering module, and a decoder;

the first rendering module is configured to: perform rendering processing on a three-dimensional scene based on a rendering parameter, to obtain a rendered image, wherein the rendering parameter comprises a first rendering parameter obtained from the terminal device; select a first intermediate rendering result based on an intermediate rendering result generated in the rendering processing process; and generate a virtual reference frame based on the first intermediate rendering result;

the encoder is configured to: predict the rendered image based on the virtual reference frame, to obtain a predicted image; encode a residual image between the predicted image and the rendered image, and encode encoded data of the residual image into a bitstream; and encode a second intermediate rendering result, and encode encoded data of the second intermediate rendering result into the bitstream, wherein the second intermediate rendering result is a part of the first intermediate rendering result;

the first communication module is configured to send the bitstream;

the second communication module is configured to receive the bitstream;

the decoder is configured to parse the bitstream, to obtain a parsing result, wherein the parsing result comprises a residual image corresponding to a current frame and a second intermediate rendering result corresponding to the current frame;

the second rendering module is configured to: perform rendering processing on the three-dimensional scene based on a rendering parameter corresponding to the current frame, and generate a third intermediate rendering result based on the second intermediate rendering result corresponding to the current frame in the rendering processing process, wherein the rendering parameter corresponding to the current frame comprises a first rendering parameter generated by the terminal device; and generate a virtual reference frame based on a first intermediate rendering result, wherein the first intermediate rendering result used by the second rendering module to generate the virtual reference frame comprises the second intermediate rendering result corresponding to the current frame and the third intermediate rendering result; and

the decoder is further configured to: predict the current frame based on the virtual reference frame generated by the second rendering module, to obtain a predicted image; and perform reconstruction based on the predicted image determined by the decoder and the residual image corresponding to the current frame, to obtain a reconstructed image of the current frame.

19. An encoding method, applied to a server, wherein the method comprises:

performing rendering processing on a three-dimensional scene based on a rendering parameter, to obtain a rendered image, wherein the rendering parameter comprises a first rendering parameter obtained from a terminal device;

selecting a first intermediate rendering result based on an intermediate rendering result generated in the rendering processing process;

generating a virtual reference frame based on the first intermediate rendering result;

predicting the rendered image based on the virtual reference frame, to obtain a predicted image;

encoding a residual image between the predicted image and the rendered image, and encoding encoded data of the residual image into a bitstream; and

encoding a second intermediate rendering result, and encoding encoded data of the second intermediate rendering result into the bitstream, wherein the second intermediate rendering result is a part of the first intermediate rendering result.

20. The method according to claim 19, wherein the bitstream further comprises a first indication identifier, and the first indication identifier indicates a type and a subtype of the second intermediate rendering result.

21. The method according to claim 19 or 20, wherein the rendering parameter further comprises a second rendering parameter generated by the server, and the method further comprises:
encoding a third rendering parameter into the bitstream, wherein the third rendering parameter comprises all or a part of parameters in the second rendering parameter.

22. The method according to any one of claims 19 to 21, wherein the rendering parameter further comprises the second rendering parameter generated by the server, and the bitstream further comprises a second indication identifier and/or a third indication identifier;

the second indication identifier indicates whether the bitstream comprises the third rendering parameter, and the third rendering parameter comprises all or a part of parameters in the second rendering parameter; and

the third indication identifier indicates a type of the third rendering parameter.

23. The method according to any one of claims 19 to 22, wherein generating the virtual reference frame based on the first intermediate rendering result comprises:

determining a type of the first intermediate rendering result; and
generating the virtual reference frame based on the first intermediate rendering result and the type of the first intermediate rendering result.

24. The method according to claim 23, wherein generating the virtual reference frame based on the first intermediate rendering result and the type of the first intermediate rendering result comprises:

generating the virtual reference frame based on the first intermediate rendering result and a reconstructed image when the type of the first intermediate rendering result is a motion vector type, wherein
the first intermediate rendering result is a computer graphics motion vector CGMV, and the CGMV is used to describe a displacement relationship between a sample in the rendered image and a sample in the reconstructed image.

25. The method according to claim 23, wherein generating the virtual reference frame based on the first intermediate rendering result and the type of the first intermediate rendering result comprises:

determining the intermediate rendering result as the virtual reference frame when it is determined that the type of the first intermediate rendering result is an image type, wherein
the first intermediate rendering result is an intermediate rendered image, and calculation complexity corresponding to the intermediate rendered image is lower than calculation complexity corresponding to the rendered image.

26. The method according to any one of claims 19 to 23, wherein
the first intermediate rendering result comprises a CGMV and/or an intermediate rendered image, and calculation complexity corresponding to the intermediate rendered image is lower than calculation complexity corresponding to the rendered image.

27. A decoding method, applied to a terminal device, wherein the method comprises:

receiving a bitstream;

parsing the bitstream, to obtain a parsing result, wherein the parsing result comprises a residual image corresponding to a current frame and a second intermediate rendering result corresponding to the current frame;
performing rendering processing on a three-dimensional scene based on a rendering parameter corresponding to the current frame, and generating a third intermediate rendering result based on the second intermediate rendering result in the rendering processing process, wherein the rendering parameter comprises a first rendering parameter generated by the terminal device;
generating a virtual reference frame based on a first intermediate rendering result, wherein the first intermediate rendering result comprises the second intermediate rendering result and the third intermediate rendering result;
predicting the current frame based on the virtual reference frame, to determine a predicted image; and
performing reconstruction based on the predicted image and the residual image, to obtain a reconstructed image of the current frame.

28. The method according to claim 27, wherein the decoding result further comprises a first indication identifier, and the first indication identifier indicates a type and a subtype of the second intermediate rendering result; and
generating the third intermediate rendering result based on the second intermediate rendering result in the rendering processing process comprises:

determining the type and the subtype of the second intermediate rendering result based on the first indication identifier; and
generating a third intermediate rendering result of another subtype based on the type and the subtype of the second intermediate rendering result in the rendering processing process, wherein the another subtype is a subtype in subtypes comprised in the type corresponding to the second intermediate rendering result other than the subtype of the second intermediate rendering result.

29. The method according to claim 27 or 28, wherein the parsing result further comprises a second indication identifier and a third indication identifier, the second indication identifier indicates whether the bitstream comprises a third rendering parameter, and the third identifier indicates a type of the third rendering parameter; and
the method further comprises:

determining the type of the third rendering parameter based on the third indication identifier when it is determined, based on the second indication identifier, that the bitstream comprises the third rendering parameter; and

generating a fourth rendering parameter of another type based on the type of the third rendering parameter, wherein the another type is a type other than the type of the third rendering parameter in a plurality of types corresponding to a second rendering parameter generated by the server, wherein

the rendering parameter further comprises the third rendering parameter and the fourth rendering parameter.

30. The method according to claim 29, wherein the method further comprises:

when it is determined, based on the second indication identifier, that the bitstream does not comprise the third rendering parameter, generating, by the terminal device, a second rendering parameter corresponding to the current frame, wherein

the rendering parameter further comprises a second rendering parameter generated by the terminal device.

31. The method according to any one of claims 27 to 30, wherein generating the virtual reference frame based on the first intermediate rendering result comprises:

determining a type of the first intermediate rendering result; and

generating the virtual reference frame based on the first intermediate rendering result and the type of the first intermediate rendering result.

32. The method according to claim 31, wherein generating the virtual reference frame based on the first intermediate rendering result and type information of the first intermediate rendering result comprises:

generating the virtual reference frame based on the first intermediate rendering result and a reconstructed image of another frame when the type of the first intermediate rendering result is a motion vector, wherein

the first intermediate rendering result is a computer graphics motion vector CGMV, and the CGMV is used to describe a displacement relationship between a sample in the reconstructed image of the current frame and a sample in the reconstructed image of the another frame.

33. The method according to claim 31, wherein generating the virtual reference frame based on the first intermediate rendering result and type information of the first intermediate rendering result comprises:

determining the first intermediate rendering result as the virtual reference frame when it is determined that the type of the first intermediate rendering result is an image type, wherein the first intermediate rendering result is an intermediate rendered image, and calculation complexity corresponding to the intermediate rendered image is lower than calculation complexity corresponding to the rendered image.

34. The method according to any one of claims 27 to 33, wherein
the first intermediate rendering result comprises a CGMV and/or an intermediate rendered image, and calculation complexity corresponding to the intermediate rendered image is lower than calculation complexity corresponding to the rendered image.

35. A bitstream generation method, wherein a bitstream is generated based on the first rendering parameter according to any one of claims 10 to 17.

36. A bitstream generation method, wherein a bitstream is generated based on the first rendering parameter according to any one of claims 27 to 34.

37. An electronic device, comprising:

a memory and a processor, wherein the memory is coupled to the processor, wherein
the memory stores program instructions, and when the program instructions are executed by the processor, the electronic device is enabled to perform the method according to any one of claims 2 to 17, or the method according to any one of claims 19 to 34.

38. A chip, comprising one or more interface circuits and one or more processors, wherein the interface circuit is configured to: receive a signal from a storage of an electronic device, and send the signal to the processor, the signal comprises computer instructions stored in the storage, and when the processor executes the computer instructions, the electronic device is enabled to perform the method according to any one of claims 2 to 17, or the method according to any one of claims 19 to 34.

39. A computer-readable storage medium, wherein the computer-readable storage medium stores a computer program, and when the computer program is run on a computer or a processor, the computer or the processor is enabled to perform the method according to any one of claims 2 to 17, or the method according to any one of claims 19 to 34.

40. A computer program product, wherein the computer program product comprises computing instructions, and when the computing instructions are executed by a computer or a processor, the steps of the method according to any one of claims 2 to 17 are performed, or the steps of the method according to any one of claims 19 to 34 are performed.

41. An apparatus for storing a bitstream, wherein the apparatus comprises a receiver and at least one storage medium;

   the receiver is configured to receive the bitstream;
   the at least one storage medium is configured to store the bitstream; and
   the bitstream is generated according to the encoding method according to any one of claims 2 to 9, or generated according to the encoding method according to any one of claims 19 to 26, or generated according to the bitstream generation method according to claim 35 or claim 36.

42. An apparatus for transmitting a bitstream, wherein the apparatus comprises a transmitter and at least one storage medium;

   the at least one storage medium is configured to store the bitstream, and the bitstream is generated according to the encoding method according to any one of claims 2 to 9, or generated according to the encoding method according to any one of claims 19 to 26, or generated according to the bitstream generation method according to claim 35 or claim 36; and
   the transmitter is configured to: obtain the bitstream from the storage medium, and send the bitstream to a device-side device through a transmission medium.

43. A system for distributing a bitstream, wherein the system comprises:

   at least one storage medium, configured to store at least one bitstream, wherein the at least one bitstream is generated according to the encoding method according to any one of claims 2 to 9, or generated according to the encoding method according to any one of claims 19 to 26, or generated according to the bitstream generation method according to claim 35 or claim 36; and
   a streaming media device, configured to: obtain a target bitstream from the at least one storage medium, and send the target bitstream to a device-side device, wherein the streaming media device comprises a content server or a content delivery server.

FIG. 1a

FIG. 1b

FIG. 2a

To-be-
encoded
video

Partitioning
module

To-be-
encoded
block

Residual
block

Transform
module

Quantization
module

Entropy
encoding
module

Bitstream

Predicted block

Intra prediction module

Predicted block

Inter prediction module

Dequantization
module

Inverse
transform
module

Decoded residual block

Reference frame

Reconstructed
block obtained
through
filtering

Storage

Loop
filtering
module

Reconstructed block

Encoder

Virtual reference frame

FIG. 2b

FIG. 3a

FIG. 3b

EP 4 629 635 A1

FIG. 4

FIG. 5

FIG. 6a

FIG. 6b

FIG. 7

FIG. 8

EP 4 629 635 A1

FIG. 9

FIG. 10

FIG. 11

FIG. 12

Server

Bitstream

Terminal device

Bitstream receiving — S1301

Bitstream

S1302 — Parsing

Third rendering parameter

Second intermediate rendering result

Residual image

S1306 — Virtual reference frame

Predicted image

Reconstruction ← Prediction ← Virtual reference frame generation — S1305

Third intermediate rendering result

Rendering — S1304

First rendering parameter and fourth rendering parameter

Parameter generation — S1303

Reconstructed image — S1307

FIG. 13

FIG. 14

## INTERNATIONAL SEARCH REPORT

| | International application No. |
|---|---|
| | **PCT/CN2023/141967** |

### A. CLASSIFICATION OF SUBJECT MATTER

H04N19/597(2014.01)i

According to International Patent Classification (IPC) or to both national classification and IPC

### B. FIELDS SEARCHED

Minimum documentation searched (classification system followed by classification symbols)

IPC: H04N

Documentation searched other than minimum documentation to the extent that such documents are included in the fields searched

Electronic data base consulted during the international search (name of data base and, where practicable, search terms used)

CNTXT; WPABSC; ENTXTC; DWPI; ENTXT; CNKI; IEEE: 编码, 参考, 插入, 插值, 产生, 创建, 得到, 构成, 构建, 构造, 合成, 获得, 生成, 视图, 图片, 图像, 虚拟, 预测, 帧, 中间, 渲染, encode, reference, insert, interpolate, produce, create, get, compose, construct, synthesize, obtain, generate, view, picture, image, virtual, prediction, frame, intermediate, render, CGMV

### C. DOCUMENTS CONSIDERED TO BE RELEVANT

| Category* | Citation of document, with indication, where appropriate, of the relevant passages | Relevant to claim No. |
|---|---|---|
| X | WO 2022207189 A1 (INTERDIGITAL VC HOLDINGS FRANCE, SAS) 06 October 2022 (2022-10-06)<br>description, paragraphs 8-147 | 1, 2, 4, 9, 10, 17, 35, 37-43 |
| Y | WO 2022207189 A1 (INTERDIGITAL VC HOLDINGS FRANCE SAS) 06 October 2022 (2022-10-06)<br>description, paragraphs 8-147 | 18, 19, 21, 26, 27, 34, 36 |
| Y | US 2014247873 A1 (FRAUNHOFER GES FORSCHUNG) 04 September 2014 (2014-09-04)<br>description, paragraphs 20-311 | 18, 19, 21, 26, 27, 34, 36 |
| A | CN 104125472 A (NVIDIA CORP.) 29 October 2014 (2014-10-29)<br>entire document | 1-43 |
| A | CN 114765689 A (HUAWEI CLOUD COMPUTING TECHNOLOGY CO., LTD.) 19 July 2022 (2022-07-19)<br>entire document | 1-43 |

☑ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **15 March 2024** | **25 March 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/141967** |

| C. | DOCUMENTS CONSIDERED TO BE RELEVANT | |
|---|---|---|
| Category* | Citation of document, with indication, where appropriate, of the relevant passages | Relevant to claim No. |
| A | WO 2022151972 A1 (HUAWEI CLOUD COMPUTING TECHNOLOGY CO., LTD.) 21 July 2022 (2022-07-21)<br>entire document | 1-43 |

Form PCT/ISA/210 (second sheet) (July 2022)

## INTERNATIONAL SEARCH REPORT
### Information on patent family members

International application No.

**PCT/CN2023/141967**

| Patent document cited in search report | | | Publication date (day/month/year) | Patent family member(s) | | | Publication date (day/month/year) |
|---|---|---|---|---|---|---|---|
| WO | 2022207189 | A1 | 06 October 2022 | KR | 20230162801 | A | 28 November 2023 |
| | | | | EP | 4315849 | A1 | 07 February 2024 |
| US | 2014247873 | A1 | 04 September 2014 | WO | 2013068491 | A1 | 16 May 2013 |
| | | | | EP | 2777266 | A1 | 17 September 2014 |
| | | | | EP | 2777266 | B1 | 25 July 2018 |
| | | | | US | 2021112269 | A1 | 15 April 2021 |
| | | | | US | 11689738 | B2 | 27 June 2023 |
| | | | | US | 2019208221 | A1 | 04 July 2019 |
| | | | | US | 10887617 | B2 | 05 January 2021 |
| | | | | US | 10264277 | B2 | 16 April 2019 |
| | | | | EP | 3462742 | A1 | 03 April 2019 |
| | | | | HK | 1202206 | A1 | 18 September 2015 |
| | | | | US | 2023328271 | A1 | 12 October 2023 |
| CN | 104125472 | A | 29 October 2014 | TW | 201442490 | A | 01 November 2014 |
| | | | | TWI | 559748 | B | 21 November 2016 |
| | | | | DE | 102013013190 | A1 | 30 October 2014 |
| | | | | US | 2014321757 | A1 | 30 October 2014 |
| | | | | US | 9483845 | B2 | 01 November 2016 |
| CN | 114765689 | A | 19 July 2022 | None | | | |
| WO | 2022151972 | A1 | 21 July 2022 | None | | | |

Form PCT/ISA/210 (patent family annex) (July 2022)

**REFERENCES CITED IN THE DESCRIPTION**

**Patent documents cited in the description**

- CN 202211703245